(19)

**Europäisches Patentamt**

**European Patent Office**

**Office européen des brevets**

(11) **EP 2 762 921 B1**

(12) **EUROPÄISCHE PATENTSCHRIFT**

(45) Veröffentlichungstag und Bekanntmachung des Hinweises auf die Patenterteilung:
**31.12.2014 Patentblatt 2015/01**

(51) Int Cl.:
**G01S 17/32** [(2006.01)]      **G01S 13/32** [(2006.01)]
**G01S 7/491** [(2006.01)]      **G01S 7/35** [(2006.01)]

(21) Anmeldenummer: **13155378.6**

(22) Anmeldetag: **15.02.2013**

(54) **Verfahren zur Bestimmung einer Signallaufzeit**

Method for determining a signal propagation time

Procédé de détermination du temps de propagation d'un signal

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2013 EP 13153219**
**30.01.2013 EP 13153223**

(43) Veröffentlichungstag der Anmeldung:
**06.08.2014 Patentblatt 2014/32**

(73) Patentinhaber: **SICK AG**
**79183 Waldkirch (DE)**

(72) Erfinder: **Weber, Thomas**
**77960 Seelbach (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:

- BARANIUK R ET AL: "Compressive Radar Imaging", RADAR CONFERENCE, 2007 IEEE, IEEE, PI, 1. April 2007 (2007-04-01), Seiten 128-133, XP031180891, DOI: 10.1109/RADAR. 2007.374203 ISBN: 978-1-4244-0283-0
- YANG HU ET AL: "Extended range profiling in stepped-frequency radar with sparse recovery", RADAR CONFERENCE (RADAR), 2011 IEEE, IEEE, 23. Mai 2011 (2011-05-23), Seiten 1046-1049, XP031902259, DOI: 10.1109/RADAR. 2011.5960695 ISBN: 978-1-4244-8901-5
- MARCO F DUARTE ET AL: "Structured Compressed Sensing: From Theory to Applications", IEEE TRANSACTIONS ON SIGNAL PROCESSING, IEEE SERVICE CENTER, NEW YORK, NY, US, Bd. 59, Nr. 9, 1. September 2011 (2011-09-01), Seiten 4053-4085, XP011371253, ISSN: 1053-587X, DOI: 10.1109/TSP. 2011.2161982
- CHENXI HU ET AL: "Random switch antenna array FMCW radar and its signal processing method", SENSOR ARRAY AND MULTICHANNEL SIGNAL PROCESSING WORKSHOP (SAM), 2012 IEEE 7TH, IEEE, 17. Juni 2012 (2012-06-17), Seiten 297-300, XP032212159, DOI: 10.1109/SAM. 2012.6250493 ISBN: 978-1-4673-1070-3
- JUHWAN YOO ET AL: "A Compressed Sensing Parameter Extraction Platform for Radar Pulse Signal Acquisition", IEEE JOURNAL ON EMERGING AND SELECTED TOPICS IN CIRCUITS AND SYSTEMS, IEEE, PISCATAWAY, NJ, USA, Bd. 2, Nr. 3, 1. September 2012 (2012-09-01), Seiten 626-638, XP011475008, ISSN: 2156-3357, DOI: 10.1109/JETCAS.2012.2214634
- MISHALI M ET AL: "From Theory to Practice: Sub-Nyquist Sampling of Sparse Wideband Analog Signals", IEEE JOURNAL OF SELECTED TOPICS IN SIGNAL PROCESSING, IEEE, US, Bd. 4, Nr. 2, 1. April 2010 (2010-04-01), Seiten 375-391, XP011327603, ISSN: 1932-4553, DOI: 10.1109/JSTSP.2010.2042414

EP 2 762 921 B1

**Beschreibung**

Die Erfindung betrifft ein Verfahren zur Bestimmung einer Signallaufzeit nach dem Oberbegriff von Anspruch 1 sowie einen für dieses Verfahren ausgebildeten Sensor.

Zahlreiche Sensoren nutzen ein Signallaufzeitprinzip, bei dem das Zeitintervall zwischen Senden und Empfang eines Signals über die Signallaufzeit in eine Entfernung umgerechnet wird. Dabei werden so verschiedene Frequenzbereiche des elektromagnetischen Spektrums ausgenutzt wie Licht, Mikrowellen oder Radar. Prinzipiell sind auch nicht elektromagnetische Trägerwellen möglich, wie bei einem Ultraschallsensor.

Die Entfernungsmessung mit Licht, also in der optoelektronischen Sensorik, wird beispielsweise in der Fahrzeugsicherheit, der Logistik- oder Fabrikautomatisierung oder der Sicherheitstechnik benötigt. Insbesondere kann ein Entfernungsmesser, der auf einem reflektierten Lichtstrahl basiert, auf eine Entfernungsänderung des Reflektors oder des reflektierenden oder remittierenden Ziels reagieren. Eine besondere Anwendung ist eine Reflexionslichtschranke, bei welcher der Abstand zwischen Lichtsender und Reflektor überwacht wird. Das Lichtlaufzeitverfahren ist auch das Prinzip, nach dem entfernungsmessende Laserscanner arbeiten, deren Fahrstrahl eine Linie oder sogar eine Fläche ausmisst.

Eine weitere Anwendung stellt die Füllstandsmessung dar, wo ein Mikrowellen- oder Radarsignal frei oder in einer Sonde geführt in den Behälter mit dem zu vermessenden Füllstand gesandt und das reflektierte Signal ausgewertet wird. Sonstige Anwendungen im Radarbereich sind allgemein bekannt und werden hier nicht weiter erläutert.

Unabhängig von dem Spektralbereich des Messsignals lassen sich die unterschiedlichen Verfahren zur Bestimmung von Signallaufzeiten zunächst grob in pulsbasierte Verfahren und Dauerstrichverfahren klassifizieren. Bei einem pulsbasierten Verfahren, wird ein kurzer Sendepuls, dessen zeitliche Lage anhand der Pulsform festgelegt ist, zu dem Messobjekt ausgesandt und die Zeit bis zum Empfang einer Reflexion des Pulses gemessen. Pulsbasierte Signallaufzeitverfahren sind nicht Gegenstand dieser Beschreibung und werden nur der Vollständigkeit halber erwähnt. Bei den Dauerstrichverfahren erfolgt eine Modulation einer Trägerwelle, die dann ausgewertet wird. Zu den Dauerstrichverfahren zählen das Pulskompressionsverfahren, das Phasenvergleichsverfahren und das Frequenzmodulationsverfahren (FMCW, Frequency Modulated Continuous Wave), die im Folgenden kurz erläutert werden.

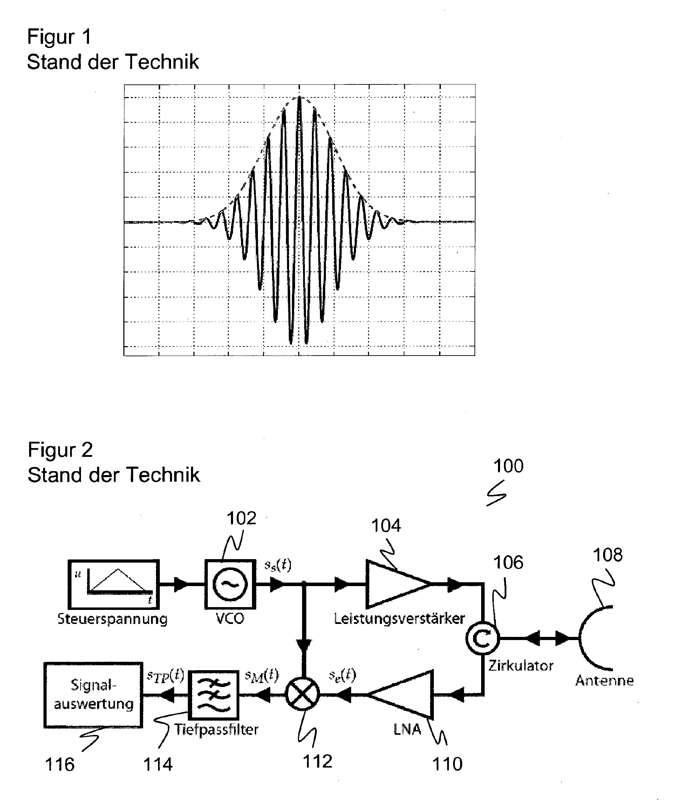

Ein Nachteil der reinen Pulslaufzeitmessung besteht darin, dass das System sehr breitbandig ausgelegt werden muss. Das wird mit dem Pulskompressionsverfahren umgangen, indem ein hochfrequenter Träger mit einer vorgegebenen Funktion multipliziert wird. Figur 1 zeigt dies beispielhaft für einen Gausspuls. Man erhält also, wenn man die Hüllkurve betrachtet, einen Puls, der zugleich im Frequenzbereich sehr schmalbandig bleibt. Dieses Verfahren wird unter anderem bei Ultraschallsystemen, deren meist auf Piezoelementen basierende Aktoren und Sensoren in der Übertragscharakteristik schmalbandig sind, oder bei Pulsradarsystemen angewandt.

Analytisch lässt sich ein derartiges Signal mit der Gleichung $y(t) = w(t) \cdot \sin(2\pi f \cdot t)$ beschreiben. Die Multiplikation der Fensterfunktion $w(t)$ mit der Sinusschwingung im Zeitbereich bedeutet im Frequenzbereich eine Faltung zwischen den beiden korrespondierenden Fouriertransformierten.

Bei einem Phasenvergleichsverfahren wird permanent eine Sinusschwingung ausgesendet. Ein Phasendetektor bestimmt die Phasenverschiebung zwischen dem Sendesignal und dem Empfangssignal. Das Verfahren stellt hohe Anforderungen an die Oberwellenfreiheit der Sinusschwingung im Sende- und Empfangssignal, weshalb eine hohe Linearität des Übertragungssystems gefordert wird. Obwohl üblicherweise die Phasenverschiebung durch einen Komparator bestimmt wird, in dem zum Beispiel der Nulldurchgang der Sinusschwingung erfasst wird, und hierdurch eine schlechte Robustheit des Verfahrens bezüglich Rauschen und Störern vermutet werden könnte, ist das Verfahren bei konsequenter Systemauslegung sehr robust, da mit einem sehr schmalbandigen Messsignal gearbeitet wird und somit der Empfangspfad ebenso stark befiltert werden kann, wodurch Rauschen und Störer, seien es optische Störer bei optoelektronischer Entfernungsmessung oder elektromagnetische bei den Radarsensoren, gut unterdrückt werden. Die Rauschbandbreite des Systems ist entsprechend klein.

Die Bestimmung der Phasenverschiebung ist zunächst nur über eine Periode des Sinussignals eindeutig, weshalb bei großen Entfernungen entweder eine sehr niederfrequente Modulation des Senders gewählt oder das Verfahren auf eine andere Art verbessert werden muss. Die niederfrequente Modulation bringt Nachteile bei der Genauigkeit mit, da sich Messunsicherheiten in der Phasenmessung in eine größere Unsicherheit bei der Entfernung übersetzen. Deswegen wird vorzugsweise mit höherer Frequenz moduliert und die Eindeutigkeit dadurch hergestellt, indem nacheinander mit Sinusschwingungen unterschiedlicher Frequenz gearbeitet und durch eine Plausibilitätsüberprüfung der richtige Abstand ermittelt wird.

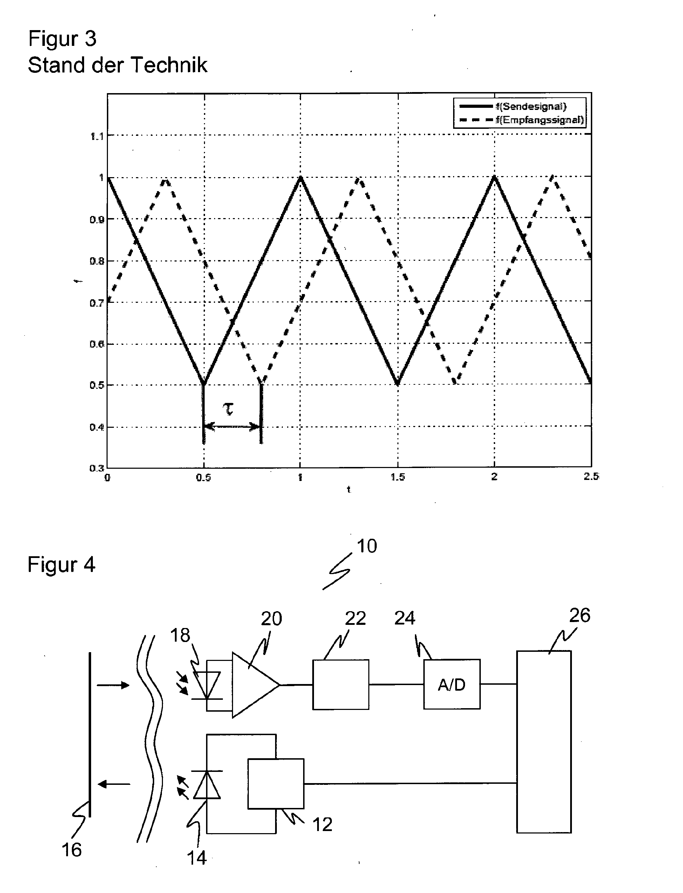

Bei einem Frequenzmodulationsverfahren wird ein Dauerstrichsignal ausgesendet und mit einem vorgegebenen zeitlichen Verlauf in seiner Frequenz moduliert. Figur 2 zeigt ein Blockschaltbild eines herkömmlichen Messkerns 100 für die Signallaufzeitbestimmung mittels Frequenzmodulation. Die veränderbare Frequenz wird durch einen spannungsgesteuerten Oszillator 102 (VCO, Voltage Controlled Oscillator) erzeugt, dem die gewünschte Frequenzmodulation mittels einer Steuerspannung vorgegeben wird. Übliche Modulationsfolgen sind dreiecksförmig beziehungsweise sägezahnförmig, wie beispielhaft in der Figur 3 für ein Sendesignal und ein dagegen verzögertes Empfangssignal dargestellt.

Das Sendesignal wird in einem Sendepfad über einen Verstärker 104, einen Zirkulator 106 und eine Antenne 108 in den Überwachungsbereich abgestrahlt. Nach Reflexion an einem Zielobjekt wird ein entsprechendes Signal an der Antenne 108 empfangen und in einem Empfangspfad über einen empfangsseitigen Verstärker 110 einem Mischer 112 zugeführt. Das empfangene Signal ist im einfachsten Modell ein um $\tau$ zeitverzögertes und gedämpftes Abbild des Sendesignals, wenn nur ein Zielobjekt vorhanden ist, an dem die elektromagnetischen Wellen reflektiert werden. In dem Mischer 112 findet ein Mischvorgang, d.h. eine Multiplikation, zwischen dem ebenfalls dem Mischer 112 zugeführten Sendesignal und dem Empfangssignal statt, wodurch als Mischprodukt die sogenannte Zwischenfrequenz entsteht.

Das Mischprodukt wird zunächst noch in einem Tiefpass 114 gefiltert, um die Zwischenfrequenz von höheren Frequenzanteilen zu befreien. Anschließend erfolgt eine Signalauswertung 116, um die gesuchte Signallaufzeit aus der Zwischenfrequenz zu bestimmen. Das ist recht einfach möglich, da die Zwischenfrequenz gerade dem Frequenzunterschied entspricht, der durch die Modulation während der durch die Signallaufzeit bedingten Verzögerung $\tau$ entstanden ist. Mit anderen Worten ist die Zwischenfrequenz der Y-Achsenanteil eines Steigungsdreiecks in Figur 3, dessen X-Achsenanteil die gesuchte Signallaufzeit oder Verzögerung $\tau$ ist.

Analytisch wird das Sendesignal durch

$$s_{up}(t) = A_s \cos(2\pi f_0 t + \pi \Delta f(t + \frac{t^2}{T_{up}})),$$

$$s_{down}(t) = A_s \cos(2\pi f_0 t + \pi \Delta f(t + \frac{t^2}{T_{down}}))$$

beschrieben. Dabei sind $A_s$ die Amplitude des Sendesignals, $\Delta f$ der Modulationshub und $T_{up}$ beziehungsweise $T_{down}$ die Zeiten für den Anstieg und Abfall der Frequenz, deren Summe die Modulationsperiode ergibt.

Entsprechend folgt mit einer zunächst nicht bekannten Empfangsamplitude $A_e$ für das um $\tau$ verzögerte Empfangssignal

$$s_{up\_e}(t) = A_e \cos(2\pi f_0 (t - \tau) + \pi \Delta f((t - \tau) + \frac{(t - \tau)^2}{T_{up}})),$$

$$s_{down\_e}(t) = A_e \cos(2\pi f_0 (t - \tau) + \pi \Delta f((t - \tau) + \frac{(t - \tau)^2}{T_{down}})).$$

In dem Mischprodukt finden sich Komponenten der doppelten Grundfrequenz, von denen hier angenommen wird, dass sie in dem Tiefpassfilter 114 ideal unterdrückt werden sowie das Zwischenfrequenzsignal

$$s_{TPup}(t) = A_{TP} \cos(2\pi(\Delta f \frac{\tau}{T_{up}}) \cdot t + \pi \Delta f \frac{T_{up} - \tau}{T_{up}} \tau + 2\pi f_0 \tau),$$

$$s_{TPdown}(t) = A_{TP} \cos(2\pi(\Delta f \frac{\tau}{T_{down}}) \cdot t - \pi \Delta f \frac{T_{down} + \tau}{T_{down}} \tau - 2\pi f_0 \tau).$$

Hierin ist für eine Signallaufzeitmessung die eigentliche Zwischenfrequenz $f_d$, d.h. die Differenzfrequenz zwischen Sende- und Empfangssignal, von Interesse, die sich aus den obigen Gleichungen zu $f_d = \Delta f \frac{\tau}{T_{up}} = \Delta f \frac{\tau}{T_{down}}$

ergibt. Die Zwischenfrequenz entspricht also bis auf Konstanten der Frequenzmodulation der gesuchten Signalverzögerung $\tau$, oder ebenso einem entsprechenden Objektabstand $R = \dfrac{cT_{up}f_d}{2\Delta f} = \dfrac{cT_{down}f_d}{2\Delta f}$.

Es gibt einige besonders hervorzuhebende Zusammenhänge zwischen den Signalparametern und der Entfernungsmessung. Um Eindeutigkeit bei der Entfernungsmessung zu garantieren, muss zunächst bei einem gegebenen, maximal zu messenden Abstand die Modulationsperiode beziehungsweise die Anstiegszeit $T_{up}$ der Frequenz die Bedingung $T_{up} > \dfrac{2R_{\max}}{c}$ erfüllen.

Die Fähigkeit, nahe beieinander liegende Ziele mit dem Abstand $d_R$ unterscheiden zu können, führt zu einer Anforderung an die Bandbreite $\Delta f$ des Systems. Bei zwei Zielen ergeben sich im Spektrum der Zwischenfrequenz zwei Frequenzen. Daraus resultiert eine notwendige Bandbreite $\Delta f = \dfrac{c}{2d_R}$. Bei einer Anforderung $d_R$ = 0,1 m resultiert $\Delta f$ = 1,5 GHz. Gängige Mischer haben eine maximale Zwischenfrequenz im Bereich von oft deutlich kleiner als 100 MHz, einige Varianten gehen bis zu einigen hundert MHz. Damit wird eine sehr hohe Zwischenfrequenz möglich, deren Abtastung nun nach Nyquist eine Abtastfrequenz von bis zu mehr als einem GHz erfordert.

Eine auftretende Dopplerfrequenz bleibt in dieser Betrachtung unberücksichtigt. In Industriellen Anwendungen sind sehr oft langsam veränderliche oder stationäre Umgebungsbedingungen vorhanden. Das ist in Anwendungen der Luftraumüberwachung oder an Fahrzeugen anders, wo regelmäßig hohe Relativgeschwindigkeiten zwischen Sensor und erkanntem Objekt vorhanden sind.

Wie sich bei den Bandbreitenbetrachtungen schon angedeutet hat, müssen für genaue Signallaufzeitbestimmungen hohe Anforderungen erfüllt werden. Entfernungsmessungen im Bereich einiger zehn Millimeter erfordern die Bestimmung der Signallaufzeit in einer Größenordnung von hundert Pikosekunden. Um eine Distanzauflösung von einem Millimeter zu erreichen, müssen sechs Pikosekunden messtechnisch erfasst werden. Eine derartige Präzision verlangt nicht nur ausgeklügelte Auswertungsverfahren, sondern setzt zunächst einmal voraus, dass das Signal überhaupt hochauflösend genug erfasst und digitalisiert wurde.

Die bekannte hinreichende Voraussetzung für die Erfassung eines Eingangssignals nach dem Shannon-Nyquist-Theorem besagt, dass durch eine Abtastung kein Verlust an Information auftritt und das ursprüngliche Signal aus den digitalen Abtastpunkten komplett rekonstruiert werden kann, wenn die Abtastrate oberhalb dem Doppelten der maximal enthaltenen Signalfrequenz liegt. Wählt man einen A/D-Wandler nach diesem Kriterium, so zeigt sich sofort ein erhebliches Problem. Wenn eine Entfernungsauflösung von 150 mm einer zeitlichen Auflösung von 1 ns entspricht, muss man erwarten, dass die Abtastrate zumindest in der Größenordnung von 1 GHz = 1 ns$^{-1}$ liegen sollte. A/D-Wandler, welche die zeitlichen Anforderungen für eine Millimeterauflösung mitbringen, werden also zumindest in absehbarer Zukunft nicht verfügbar sein. Dies gilt erst recht dann, wenn man die Herstellkosten im Blick hat, die nur den Einsatz vergleichsweise kostengünstiger Bausteine erlauben.

In der Signalverarbeitung gibt es unter dem Stichwort "Compressive Sensing" Ansätze, wie aus einer Teilerfassung eines Signals das gesamte Signal unter vollständigem Erhalt der Information rekonstruiert werden kann. Diese Verfahren werden in der Literatur theoretisch betrachtet und werden für die praktische Distanzmessung in Sensoren nach dem Signallaufzeitprinzip nicht eingesetzt. Es zeigen sich auch praktische Schwierigkeiten, wenn ein von einem realen Empfänger erfasstes analoges Signal verarbeitet werden soll, welche im Stand der Technik nicht diskutiert und folglich nicht gelöst werden.

Als kurze Einführung in Compressive Sensing sei ein eindimensionales Signal $x[i]$, $i$ = 1..$N$ betrachtet, welches zeitdiskret ist, reelle Werte annimmt und durch einen Spaltenvektor der Dimension $N$ dargestellt wird. Diese vertraute Darstellung enthält implizit eine diskrete Basis für den Zeitbereich. Allgemein kann das Signal aber auch in jeder anderen Basis $\Psi$ über $x = \Psi s$ dargestellt werden, wobei s das Signal zu Basis $\psi$ und $\psi$ eine $N \times N$-Matrix ist. Ein bekanntes Beispiel für einen Basiswechsel ist die Fouriertransformation, die den Zeitbereich mit dem Frequenzbereich verknüpft.

Viele reale Signale $x[i]$ nutzen nicht alle $N$ verfügbaren Freiheitsgrade aus, haben also nur $K < N$ Werte ungleich Null. Der Anteil an Nullen ist regelmäßig sogar erheblich. Diese Eigenschaft wird in der Mathematik als dünne Besetzung (sparsity, Spärlichkeit) bezeichnet. Ein spärlich besetztes Signal kann ohne Informationsverlust auf die Länge $K$ komprimiert werden. Compressive Sensing basiert nun einerseits darauf, dass eine dünne Besetzung nicht im Zeitbereich vorhanden sein muss, sondern auch zu einer beliebigen Basis $\Psi$ gegeben sein kann. Andererseits wird im Gegensatz zu herkömmlichen Kompressionsverfahren nicht zuerst das Signal mit all seiner Redundanz aufgezeichnet und anschließend komprimiert, sondern direkt das komprimierte Signal erfasst.

Ein sehr anschauliches Beispiel liefert die Betrachtung eines Sinussignals, das im Zeitbereich nicht dünn besetzt ist, im Frequenzbereich jedoch durch einen einzigen Parameter beschrieben ist. Hier wäre also $\Psi$ die Fourierbasis, mit deren Hilfe die dünne Besetzung erreicht wird und mit deren Hilfe es genügt, nur den einen Frequenzparameter zu bestimmen, um das gesamte Signal zu rekonstruieren.

Führt man eine Messmatrix Φ ein, so entsteht das erfasste Signal $y$ aus dem ursprünglichen Signal durch Matrixmultiplikation. Zu einer beliebigen Basis lässt sich dann der Vorgang der Signalerfassung in einem linearen Gleichungssystem $y = \Phi x = \Phi \Psi s$ zusammenfassen. Compressive Sensing muss nun vor allem zwei Herausforderungen lösen:

Es gilt zunächst, eine geeignete Messmatrix Φ anzugeben, die für alle in Frage kommenden dünn besetzten Signale $x$ geeignet ist. Eine Wahl der Messmatrix Φ basiert auf einer Zufallsmatrix mit voneinander unabhängigen, normalverteilten Elementen. Die Messmatrix Φ sollte möglichst unkorreliert zum zu messenden Signal sein und in sich geringe lineare Abhängigkeiten zeigen, wofür sich jeweils mathematische Maße angeben lassen.

Außerdem muss ein Rekonstruktionsalgorithmus gefunden werden, denn das angegebene lineare Gleichungssystem ist unterbestimmt und damit nicht direkt lösbar, solange y eine Dimension $M < N$ aufweist, was ja Sinn des ganzen Verfahrens ist. Die Stellen, an denen das Signal $x$ nichtverschwindende Anteile hat, sind dabei unbekannt. Vorausgesetzt werden darf nur, dass es $K \leq M$ Werte ungleich Null enthält.

Es gibt Verfahren wie die Pseudoinverse beziehungsweise Moore-Penrose-Inverse, um auch ein unterbestimmtes lineares Gleichungssystem zu lösen. Allgemein wird hierzu eine Norm des Restfehlers minimiert, wobei die verbreitetste Norm die $L_2$-Norm zur Minimierung des quadratischen Fehlers ist. Im Zusammenhang mit Compressive Sensing führen diese Verfahren in aller Regel nicht zum Ziel, weil die Minimierung nicht auf den Erhalt der dünnen Besetzung achtet. Geht die dünne Besetzung verloren, ist die Lösung aber unbrauchbar.

Im Gegensatz zu der $L_2$-Norm zählt die $L_0$-Norm gerade die von Null verschiedenen Werte, so dass deren Minimierung die angestrebte dünne Besetzung verspricht. Unglücklicherweise sind Optimierungsverfahren der $L_0$-Norm instabil und zudem noch lediglich NP-vollständig. Die Optimierung der $L_1$-Norm dagegen erhält etwas überraschend die dünne Besetzung und stellt dabei noch ein konvexes Optimierungsproblem, d.h. ein gefundenes Optimum ist automatisch auch das globale Optimum. Über den Simplex-Algorithmus steht hier ein geeignetes Verfahren zur Verfügung. Dennoch sind alle diese Verfahren aufwändig und liefern in einer realen Signallaufzeitmessung keine befriedigenden Ergebnisse.

Die Rekonstruktion eines Signals, das nur eine dünne Besetzung in mehreren Frequenzbändern aufweist, wird in der Arbeit von M. Lexa et al., "Sampling Sparse Multiband Signals with a Modulated Wideband Converter", Technical Report, Institute of Digital Communications, University of Edingburgh, May 2010, Revised January 2011 beschrieben. Diese Arbeit geht aber nicht auf die Messung von Signallaufzeiten ein.

Aus der Arbeit von R. Baraniuk et al., "Compressive Radar Imaging", Radar Conference, 2007 IEEE, 1. April 2007, Seiten 128-133, ISBN 978-1-4244-0283-0 ist bekannt, in einem Radarsystem mit nur wenig Messpunkten auszukommen, indem das Signal mit Methoden des Compressive Sensing rekonstruiert wird.

Es ist daher Aufgabe der Erfindung, eine verbesserte Signalerfassung für die Signallaufzeitmessung anzugeben.

Diese Aufgabe wird durch ein FMCW-Verfahren zur Bestimmung einer Signallaufzeit nach Anspruch 1 sowie einen für dieses Verfahren ausgebildeten Sensor gelöst. Dabei geht die Erfindung von dem Grundgedanken aus, die dünne Besetzung (sparsity) des Eingangssignals bei der Signallaufzeitmessung auszunutzen, um das Eingangssignal mit einer geringeren Auflösung zu digitalisieren, als an sich für die angestrebte effektive Auflösung erforderlich. Es wird deshalb nur ein Rohsignal mit der geringeren Auflösung digitalisiert und anschließend das Eingangssignal mit Verfahren des Compressive Sensing rekonstruiert. Diese Rekonstruktion kann explizit sein, woraufhin das rekonstruierte Signal in der effektiven Auflösung vorliegt. Ebenso mit dem Begriff Rekonstruktion umfasst ist aber auch eine nur implizite Rekonstruktion. In diesem Fall werden schon im Rahmen einer nur teilweisen Rekonstruktion oder mit Verfahren, wie sie auch für eine Rekonstruktion berechnet würden, die jeweils gesuchten Ausgangsgrößen gefunden, ohne dass irgendwo ein vollständiges rekonstruiertes Signal erzeugt oder abgespeichert wird.

Hierbei entspricht die Auflösung dem zeitlichen Abstand jeweils zweier diskreter Werte des Rohsignals beziehungsweise des Eingangssignals, nicht etwa der Bitbreite der Digitalisierung, wobei Auflösung so verstanden sein soll, dass die derart aufgelöste Signalinformation tatsächlich dem realen Signal entspricht. Im Gegensatz dazu stünde beispielsweise eine Interpolation, mit der zwar die nominellen zeitlichen Abstände der Signalwerte verringert werden, jedoch die Zwischenwerte lediglich auf Annahmen und nicht auf Messinformationen beruhen.

Mit dem hochaufgelöst rekonstruierten Eingangssignal wird dann die Signallaufzeit mit Hilfe der Modulation bestimmt. Da das Sendesignal ein Dauerstrichsignal ist, besteht das Eingangssignal aus einem Abschnitt, welcher eine ausreichende Codierung und Erfassung der Modulationseigenschaften ermöglicht. Entsprechend ist auch denkbar, das Sendesignal nicht durchgehend, sondern nur über gewisse Zeitabschnitte auszusenden. Die Messung beinhaltet möglicherweise eine Wandlung des Signals, beispielsweise mittels Lichtsender und Lichtempfänger von elektronisch nach optisch und zurück oder mittels eines Ultraschallwandlers von elektrisch nach Ultraschall und zurück, die bei Messungen mit Radar oder Mikrowelle entfallen kann.

Die Rekonstruktion erfolgt mittels eines sogenannten Modulated Wideband Converters (MWC). Damit wird die Annahme getroffen, dass das Eingangssignal ein im Frequenzbereich dünn besetztes Signal ist, dessen besetzte Spektralbänder aber vorab unbekannt sind. Für die Rekonstruktion derartiger Eingangssignale sind MWCs geeignet. Die vorausgesetzte Annahme ist erfüllt, weil das Empfangssignal aus einer Überlagerung der verschiedenen gedämpften Echos des Sendesignals besteht. Gerade im Falle eines FMCW-Verfahrens ermöglicht ein MWC die Auslegung des Modulationshubs ohne Kompromisse wegen enger Anforderungen an die Bandbreite und damit eine hohe Messgenauigkeit.

Die Erfindung hat den Vorteil, dass eine hochaufgelöste Erfassung eines Eingangssignals mit einem vergleichsweise langsamen A/D-Wandler ermöglicht wird, der an sich den Messanforderungen nicht entspricht. Dies bedeutet, dass Eingangssignale der digitalen Auswertung zugänglich werden, die mit derzeitiger Hardware nicht erfassbar sind, oder für die zwar entsprechende schnelle A/D-Wandler erhältlich, jedoch in Anbetracht der Herstellkosten praktisch nicht verwendbar wären.

Das Eingangssignal wird bevorzugt auf Basis einer Transformation des Eingangssignals in eine Repräsentation rekonstruiert, in der das Eingangssignal mit der effektiven Auflösung durch die geringere Anzahl an Freiheitsgraden des digitalen Rohsignals in der geringeren Auflösung darstellbar ist. Da das Eingangssignal nicht unbedingt im Zeitbereich dünn besetzt ist, beruht die Rekonstruktion auf einer Repräsentation, also einem Satz von Basisfunktionen, in dem das Eingangssignal dünn besetzt darstellbar ist. Damit kann die Abtastrate deutlich kleiner gewählt werden, als es durch das Shannon-Nyquist-Kriterium gefordert wird. Theoretisch geht dabei gar keine Messinformation verloren, weil das Eingangssignal vollständig rekonstruiert wird. Praktisch wird zumindest eine erhebliche Reduktion der Abtastrate ohne nennenswerte Auswirkung auf den Messfehler erreicht. Die Abtastrate bei der Digitalisierung kann um einen Faktor 2 bis hundert oder sogar noch mehr geringer sein, als die effektive Abtastung nach Rekonstruktion. Beispielsweise wird ein Signal mit einer effektiven Auflösung oder Bandbreite von einigen GHz erfasst, obwohl die tatsächliche Abtastung lediglich mit einigen zehn oder hundert MHz erfolgt. Für derartige effektive Auflösungen stünden derzeit bei einigermaßen hoher Bitbreite gar keine oder zumindest keine kostengünstigen A/D-Wandler zur Verfügung.

Die Rekonstruktion erfolgt vorzugsweise in einer Repräsentation im Frequenzbereich. Eine solche Rekonstruktion geht von der Annahme aus, dass das Signal abhängig von der Anzahl der Reflexionsstellen aus einer Summe von Sinussignalen besteht, weshalb die Darstellung im Frequenzbereich dünn besetzt oder spärlich ist. Mit Hilfe von Methoden des Compressive Sensing wird die Rekonstruktion solcher Signale trotz vergleichsweise langsamer Abtastung ermöglicht.

Die Abtastung erfolgt vorzugsweise mit einer Bitbreite von höchstens vier Bit. Es kann nachgewiesen werden, dass zumindest für einige Rekonstruktionsverfahren eine höhere Bitbreite praktisch nicht mehr zu einem verbesserten Ergebnis führt. Deshalb werden auf diese Weise die Herstellkosten gesenkt, ohne dafür Genauigkeit aufzugeben. Im Extremfall wird nur mit einem Bit digitalisiert, also in einem Binarisierer oder Komparator. Damit das gelingt, wird vorzugsweise auf eine Filterung im analogen Empfangspfad verzichtet und stattdessen erst nachgelagert digital gefiltert. Der Komparator arbeitet mit einer vergleichsweise hohen Abtastrate, das digitale Rohsignal mit geringerer Auflösung entsteht durch Dezimierung der Abtastwerte.

Das Sendesignal wird vorzugsweise frequenzmoduliert, und das empfangene reflektierte Signal wird mit dem Sendesignal gemischt, um als Eingangssignal ein Zwischenfrequenzsignal zu bilden, das abgetastet wird, um das digitale Rohsignal zu erhalten. Hier ist also das zu digitalisierende Signal nicht direkt das Empfangssignal, sondern ein daraus abgeleitetes Signal. Die Frequenzmodulation für ein derartiges FMCW-Verfahren erfolgt wie einleitend erläutert vorzugsweise sägezahnartig oder verallgemeinert mit einer Frequenzrampe, die periodisch und stückweise monoton und kontinuierlich ist.

Dabei wird bevorzugt die Signallaufzeit aus einem Vergleich der Zwischenfrequenz mit der bekannten Frequenzmodulation bestimmt. Wie einleitend gesehen, kann aus der Zwischenfrequenz und den Parametern der Frequenzmodulation die gesuchte Signallaufzeit sehr einfach ermittelt werden. Für hohe Genauigkeitsansprüche an die Signallaufzeitbestimmung werden große Modulationshübe und damit eine hohe Bandbreite der Zwischenfrequenz erforderlich. Mit Hilfe der Rekonstruktion des Zwischenfrequenzsignals werden diese Bandbreitenanforderungen ganz entscheidend abgemildert.

Das Sendesignal wird bevorzugt mit einer Hüllkurve amplitudenmoduliert, die einen Zeitpunkt auszeichnet, und die Signallaufzeit wird anhand eines Empfangszeitpunkts der Hüllkurve bestimmt. Diese Auswertung entspricht einem Pulskompressionsverfahren als Alternative zu einem FMCW-Verfahren. Die Hüllkurve zeichnet dabei einen festen Zeitpunkt aus, beispielsweise das Maximum eines Gausspulses oder entsprechende Charakteristika wie Nullstellen, Maxima, Wendepunkte oder Sprünge anderer Hüllkurven. Die auch als Fensterfunktion bezeichnete Hüllkurve wird für diesen Anwendungszweck üblicherweise nicht breitbandig sein, weshalb sich im Frequenzbereich eine spärliche Repräsentation des Signals am Empfänger ergibt, die durch Compressive Sensing ausgenutzt werden kann. In einer anderen bevorzugten Alternative zu einem FMCW- und einem Pulskompressionsverfahren wird das Sendesignal mit einer periodischen Hüllkurve amplitudenmoduliert und die Signallaufzeit aus einem Phasenversatz der Hüllkurve zwischen Sendesignal und empfangenem reflektiertem Signal bestimmt. Auch in einem derartigen Phasenvergleichsverfahren ergibt sich eine spektral sehr einfache Repräsentation. Da sowohl bei einem Pulskompressionsverfahren als auch einem Phasenvergleichsverfahren die Trägerfrequenz jeweils konstant und bekannt ist, gibt es möglicherweise effektivere Rekonstruktionen als in dieser Beschreibung angegeben. Das ändert aber nichts an der Anwendbarkeit der beschriebenen Rekonstruktionen auch in diesen Fällen.

Vorzugsweise erfolgt vor der Abtastung eine analoge Filterung, insbesondere in einem Tiefpassfilter. Im Zeitbereich betrachtet ergibt sich durch Tiefpassfilterung eine Streckung des Eingangssignals, damit dessen Informationen auch mit geringerer Abtastrate erfassbar werden. Dies kann in pulsbasierten Systemen ausgenutzt werden. In einem Frequenzmodulationsverfahren dient die Filterung dazu, höhere Frequenzanteile und insbesondere die durch den Mischvorgang entstehenden Frequenzanteile der doppelten Grundfrequenz auszublenden, damit nur die gesuchte Zwischenfrequenz erhalten bleibt. Das Tiefpassfilter sollte dementsprechend an den Modulationshub angepasst sein.

Das Eingangssignal wird bevorzugt mehrfach, jeweils nach Multiplikation mit einer jeweiligen binären Zufallsfolge, mit der geringeren Auflösung abgetastet, um als Rohsignal eine entsprechende Mehrzahl von Abtastfolgen zu erhalten, wobei zur Rekonstruktion die Kovarianzmatrix der Abtastfolgen berechnet, eine Eigenwertzerlegung der Kovarianzmatrix vorgenommen und anschließend zur Rekonstruktion ein Gleichungssystem gelöst wird, bei dem eine Diagonalmatrix mit den Wurzeln der Eigenwerte gleichgesetzt wird mit einem Matrixprodukt aus einer Messmatrix, welche die binären Zufallsfolgen enthält, mit dem Operator der Fouriertransformation und mit dem gesuchten zu rekonstruierenden Signal. Dies ist eine Ausführungsform eines MWC. Die Kovarianzmatrix ist per Konstruktion symmetrisch und damit diagonalisierbar, also einer vollständigen Eigenwert- oder Spektralzerlegung zugänglich. Nach der Eigenwertzerlegung verbleibt ein lineares Gleichungssystem, dessen Lösung das gesuchte rekonstruierte Eingangssignal ist.

Die mehrfachen Abtastungen erfolgen bevorzugt nacheinander. Anschaulich gesprochen wird je eine Abtastung benötigt, um ein besetztes Frequenzband zu rekonstruieren. Erfolgen die entsprechenden Messungen nacheinander, so genügt ein einfacher A/D-Wandler. Das gesamte Eingangssignal ist dann wegen Linearität die Überlagerung. Allerdings besteht im Rahmen der Signallaufzeitbestimmung weniger Interesse an der Überlagerung, da jede einzelne Komponente von einer Reflexion an einem Objekt verursacht wird. Es besteht daher auch die Möglichkeit, die Komponenten einzeln auszuwerten, jeweils einem Objekt zuzuordnen und gegenseitig zu plausibilisieren, statt zunächst ein Überlagerungssignal zu bilden und darin anschließend wieder die einzelnen Objektreflexionen zu identifizieren. Dabei werden also Rekonstruktion und Auswertung in einem Verfahren verschmolzen. Alternativ zu einer seriellen ist auch eine parallele Mehrfachabtastung denkbar, die aber entsprechende Hardware für den A/D-Wandler voraussetzt. In den meisten industriellen Anwendungen ist die Messsituation ausreichend stationär für eine serielle Messung, so dass mit einer Parallelabtastung lediglich Ansprechzeit gewonnen wird. Dieser Vorteil wiegt die höheren Hardwareanforderungen häufig nicht auf.

Vorzugsweise wird nach Gewinnung einer Abtastfolge geprüft, ob diese einen Gleichanteil enthält, und in diesem Fall die Abtastung mit der zugehörigen binären Zufallsfolge zur Gewinnung der Abtastfolge möglichst ohne Gleichanteil wiederholt wird. Praktisch kann diese Überprüfung durch Bilden eines Mittelwerts der Abtastfolge und Vergleich mit einer Schwelle nahe Null erfolgen. Gleichanteile können in einem schwingenden Dauerstrichsignal eigentlich nicht vorkommen und deuten deshalb auf einen Pulsstörer hin. Wiederholt man die Messung, so besteht eine hohe Wahrscheinlichkeit, dass der Pulsstörer nicht erneut auftritt. Falls sich aber der Gleichanteil durch Messwiederholung nicht eliminieren lässt, müssen die Wiederholungen irgendwann abgebrochen werden.

Das Rohsignal wird bevorzugt vor der Rekonstruktion digital aufbereitet, so dass die Eigenschaft des Eingangssignals, dass es dünn besetzt ist oder eine endliche Anzahl von Freiheitsgraden aufweist, auch unter auf das Eingangssignal einwirkenden Störeinflüssen erhalten bleibt. Verschiedene Störeffekte, wie ein Burst oder ein Dauerstörer fester Frequenz, können die dünne Besetzung des Signals zerstören und damit auch die erfolgreiche Rekonstruktion verhindern. Man kann die Signale dann nicht einfach mit bekannten Filtern bearbeiten, beispielsweise durch Glättung. Diese Filter wirken üblicherweise im Zeitbereich oder im Frequenzbereich und beachten daher Eigenschaften in der unbekannten Basis der Rekonstruktion nicht. Man muss vielmehr Signalaufbereitungen mit einer Berücksichtigung der Rekonstruktion verwenden.

Die Abtastrate ist bevorzugt größer gewählt, als zur Rekonstruktion des Eingangssignals erforderlich. Je nach Typ des Eingangssignals genügen bei dessen dünner Besetzung eine gewisse Anzahl Abtastungen zur vollständigen Rekonstruktion. Diese mathematische Untergrenze wird nach dieser bevorzugten Ausführungsform zum Ausgleich diverser Störeinflüsse auf das Rohsignal nicht ausgereizt, sondern gegenüber der Untergrenze überabgetastet. Dabei bleibt die Anzahl der Abtastungen unterhalb der effektiven Auflösung, in der Regel sogar weiterhin um einen Faktor von 2 bis 100. Das Verfahren wird auf diese Weise robuster.

Das erfindungsgemäße Verfahren wird vorzugsweise in einem Sensor zur Abstandsmessung eingesetzt, insbesondere einem optischen Entfernungstaster, einem Laserscanner, einem Füllstandssensor oder einem Radarsensor mit einem Sender, einem Empfänger, einem A/D-Wandler und einer Auswertungseinheit zur Durchführung der Signallaufzeitmessung und Rekonstruktion des Eingangssignals. Deren Messauflösung wird verbessert, wobei lediglich Auswertungskapazitäten benötigt und keine erhöhten Hardwareanforderungen gestellt werden. Bei einem Füllstandssensor wird nicht im klassischen Sinne ein Überwachungsbereich überwacht, sondern in diesem Zusammenhang wird der Behälter mit dem Medium als Überwachungsbereich aufgefasst, dessen Füllstand gemessen wird.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Fig. 1    eine Darstellung einer mit einem Gausspuls amplitudenmodulierten Trägerwelle zur Illustration des bekannten Pulskompressionsverfahrens;

Fig. 2    eine Blockdarstellung eines herkömmlichen Messkerns für ein Frequenzmodulationsverfahren (FMCW),

Fig. 3    eine Darstellung einer beispielhaft sägezahnartigen Frequenzmodulation eines Sendesignals und eines Empfangssignals bei einem Frequenzmodulationsverfahren gemäß Figur 2;

Fig. 4    eine vereinfachte Blockdarstellung eines Messkerns für eine Signallaufzeitmessung;

Fig. 5    eine vereinfachte Darstellung eines Radarsensors zur Füllstandsmessung;

Fig. 6    eine vereinfachte Darstellung eines eindimensionalen entfernungsmessenden optoelektronischen Sensors;

Fig. 7    eine Blockdarstellung eines Laserscanners;

Fig. 8    eine Darstellung der Struktur eines Modulated Wideband Converters (MWC);

Fig. 9    ein beispielhaftes Zwischenfrequenzsignal einer FMCW-Signallaufzeitmessung mit zugehörigem Betragsspektrum;

Fig. 10   beispielhafte Mischprodukte und resultierende Abtastfolgen der einzelnen Kanäle eines MWCs;

Fig. 11   ein beispielhaftes Zwischenfrequenzsignal als Eingangssignal eines MWCs und dessen Rekonstruktion;

Fig. 12   eine Darstellung der verschiedenen Ebenen der Signalerfassung zur Erläuterung von Angriffspunkten für Störkompensationen;

Fig. 13   einen beispielhaften Algorithmus zur Rekonstruktion eines Signals mittels MWC mit Abschätzung von dessen Rechenaufwand;

Fig. 14   eine Ausführungsform eines MWCs mit 1-Bit-Quantisierung durch einen Komparator und erst anschließender digitaler Tiefpassfilterung sowie Dezimierung auf eine geringe Abtastrate;

Fig. 15a  beispielhafte Signale in verschiedenen Verarbeitungsstufen innerhalb einer MWC-Struktur gemäß Figur 14;

Fig. 15b  längs der X-Achse gestreckte Ausschnittsdarstellungen der Signale gemäß Figur 15a;

Fig. 16   ein Vergleich von mittels 1-Bit-Quantisierung erfassten Eingangssignalen bei analoger Tiefpassfilterung vor beziehungsweise digitaler Tiefpassfilterung nach der Abtastung; und

Fig. 17   den Vergleich der Spektren eines beispielhaften ursprünglichen Eingangssignals und von dessen Rekonstruktion mit einer MWC-Struktur gemäß Figur 14.

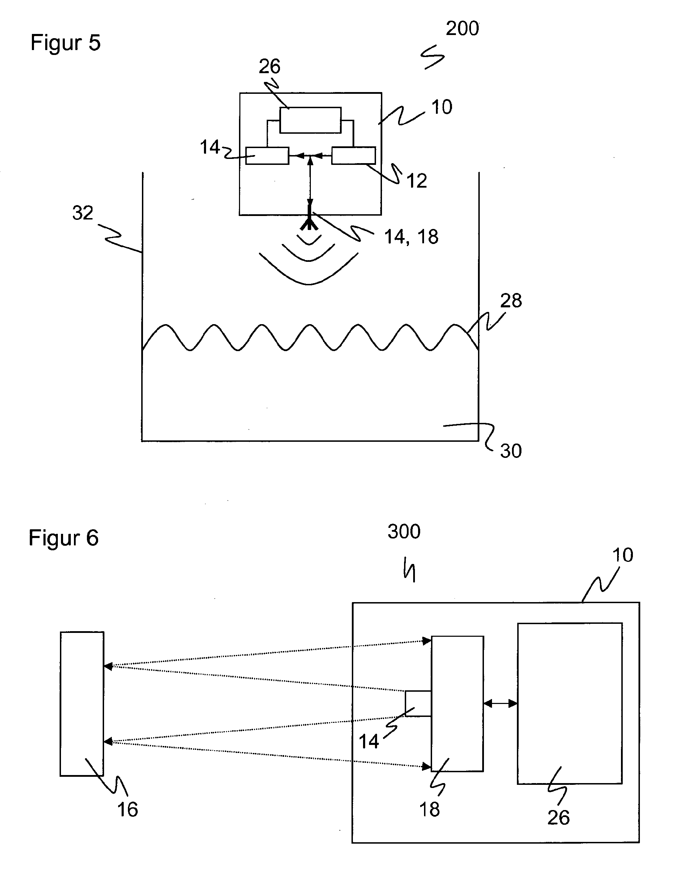

Figur 4 zeigt ein vereinfachtes Blockschaltbild eines Messkerns 10 zur Bestimmung einer Entfernung nach einem Signallaufzeitprinzip. Beispiele für Sensoren, in denen der Messkern 10 eingesetzt wird, sind Radarsensoren, optoelektronische Sensoren oder Ultraschallsensoren zur Abstandserfassung von Objekten einschließlich des Abstandes einer Grenzfläche wie bei einer Füllstandsmessung. Einige nicht abschließende Beispiele solcher Sensoren werden anschließend im Zusammenhang mit den Figuren 5-7 erläutert.

Mittels einer Treiberschaltung 12 wird über einen Sender 14 ein elektromagnetisches Signal, dargestellt als Lichtsignal, ausgesandt und von einem Objekt 16 oder einer Grenzfläche zurückgeworfen. Das reflektierte Signal wird in einem Empfänger 18 registriert und in ein elektrisches Empfangssignal umgewandelt. Im Falle von Mikrowellen- oder Radarsignalen kann die Wandlung des elektromagnetischen Signals entfallen und das Sendesignal abgestrahlt und nach Reflexion empfangen werden. Das Empfangssignal durchläuft eine analoge Vorverarbeitung, dargestellt beispielhaft mit einem Verstärker 20 und einem Filter 22, und wird dann in einem A/D-Wandler 24 digitalisiert.

Sender 14 und Empfänger 18 werden von einer Steuer- und Auswertungseinheit 26 angesteuert und ausgewertet, die auf einem digitalen Baustein implementiert ist, beispielsweise einem FPGA (Field Programmable Gate Array) 18, einem Mikrocontroller oder dergleichen. Die Steuer- und Auswertungseinheit 26 bestimmt Modulationseigenschaften des Sendesignals über die Treiberschaltung 12 und erhält das digitalisierte Signal des A/D-Wandlers zur weiteren Auswertung. In dieser Auswertung wird aus Modulationseigenschaften von Sendesignal und Empfangssignal eine Signallaufzeit bestimmt. Dabei sind insbesondere die drei einleitend genannten Verfahren Pulskompression, Phasenvergleich und Frequenzmodulation (FMCW) denkbar.

Der Messkern 10 kann also insbesondere für ein FMCW-Verfahren ausgestaltet sein, wie dies einleitend anhand der Figur 2 beschrieben wurde. Hier ist beispielsweise in der Treiberschaltung 12 der VCO 102 vorgesehen, um entsprechende sägezahnartige Frequenzmodulationen zu erzeugen. Weiterhin ist in einer Ausführungsform des Messkerns 10 für ein FMCW-Verfahren ein nur in Figur 1 und nicht in Figur 4 gezeigter Mischer 112 zur Erzeugung der Zwischenfrequenz aus Sende- und Empfangssignal vorgesehen, und das Filter 22 ist als Tiefpassfilter 114 zum Isolieren der Zwischenfrequenz ausgelegt.

Die Figuren 5 bis 7 zeigen nicht abschließend einige Sensoren, in denen der Messkern 10 einsetzbar ist. Dabei bezeichnen die gleichen Bezugszeichen wie in allen Figuren die gleichen oder zueinander analogen Merkmale. Mehrere Einheiten des Sende- und Empfangspfades, wie Filter 22, A/D-Wandler 24 oder Mischer 112, sind hier der Übersichtlichkeit halber nicht gezeigt.

Figur 5 zeigt einen Füllstandssensor 200 nach dem Radarprinzip mit dem Messkern 10, der die Entfernung zu einer Grenzfläche 28 eines Mediums 30 und damit den Füllstand des Mediums 30 in einem Behälter 32 misst. Sender 14 und Empfänger 18 sind hier gemeinsam als Antenne dargestellt, welche das Radarsignal abstrahlt und empfängt.

In Figur 6 ist ein eindimensionaler optoelektronischer Sensor 300 sehr vereinfacht dargestellt, wobei der Sender 14 als Lichtsender und der Empfänger 18 als Lichtempfänger ausgebildet ist. Der Lichtsender 14 verdeckt nur einen kleinen und unerheblichen Anteil des an einem Reflektor oder dem Zielobjekt 16 reflektierten Lichtstrahls, der sich auf seinem Weg aufweitet. Alternativ sind auch andere bekannte optische Lösungen einsetzbar, wie Autokollimation etwa mit einem Strahlteiler und einer gemeinsamen Optik, oder Pupillenteilung, wo zwei getrennte Optiken vorgesehen sind und Lichtsender und Lichtempfänger nebeneinander angeordnet werden.

Der Sensor 200 kann ein optoelektronischer Taster oder Entfernungsmesser sein. Neben einer eigentlichen Entfernungsmessung, bei der ein Absolutwert für eine Entfernung zu einem Objekt 16 ermittelt wird, ist auch die Überwachung eines eingelernten Abstands, beispielsweise zu einem festen kooperativen Ziel 16, auf Änderungen des eingelernten Abstands denkbar. Eine weitere Ausführungsform ist eine Reflexionslichtschranke, also eine Lichtschranke mit einem Lichtsender und einem gegenüber angeordneten Reflektor, wobei eine Unterbrechung des dort reflektierten Strahls detektiert wird. Durch die Messung der Entfernung oder der Änderung der Entfernung dieses Reflektors kann überwacht werden, ob der Reflektor noch am erwarteten Ort steht. Alle genannten Sensoren können einen Entfernungswert ausgeben oder anzeigen oder auch als Schalter arbeiten, indem ein Schaltereignis bei Detektion eines Objekts in einer bestimmten Entfernung oder bei Abweichung von einer erwarteten Entfernung ausgelöst wird. Mehrere Sensoren 300 können kombiniert werden, um ein tastendes Lichtgitter mit mehreren, meist parallelen Strahlen zu bilden, welches in jedem Strahl Entfernungen misst oder überwacht. Auch mobile Systeme sind denkbar, bei denen der Sensor 300 beweglich montiert ist.

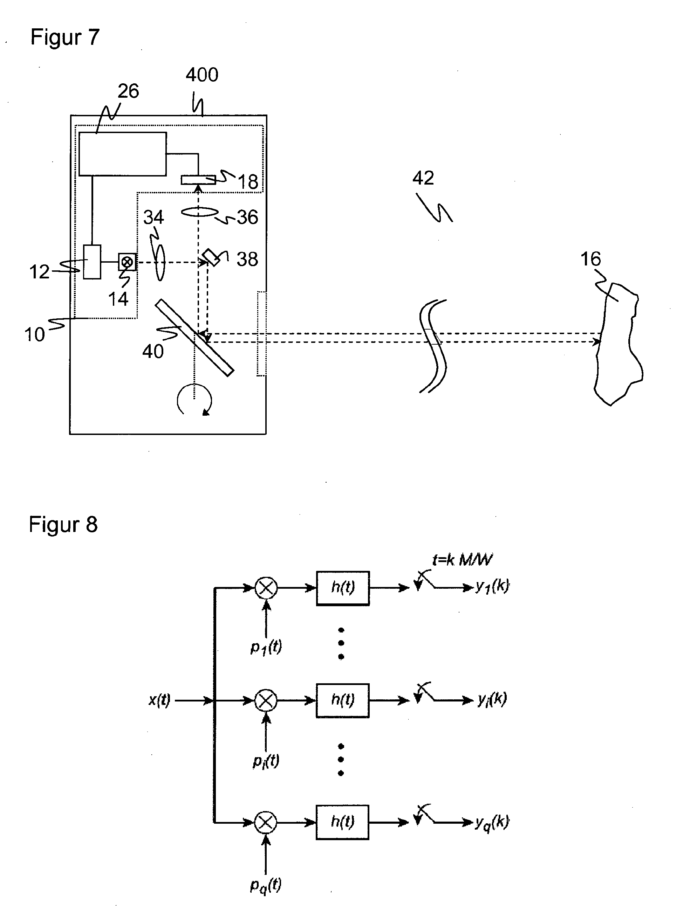

In Figur 7 ist ein Laserscanner 400 mit dem Messkern 10 dargestellt. Laserscanner arbeiten oft pulsbasiert, jedoch auch mit Dauerstrichsignalen wie bei einem Phasenvergleichsverfahren. Lichtsender 14 und Lichtempfänger 18 ist jeweils eine Optik 34, 36 zugeordnet, wobei derartige Optiken üblicherweise auch bei einem eindimensionalen Sensor 300 gemäß Figur 6 vorgesehen sind. Der Scanstrahl des Lichtsenders 14 wird über eine erste Ablenkeinheit 38 und eine zweite Ablenkeinheit 40 in einen Überwachungsbereich 42 gelenkt. Die beispielsweise als Spiegel ausgebildeten Ablenkeinheiten 38, 40 sind drehbar gelagert, so dass der Scanstrahl periodisch über eine Scanebene geführt wird. Dabei ist die drehbare Einheit mit den Ablenkeinheiten 38, 40 mit einem Encoder versehen, so dass die Winkellage stets bekannt ist. Die erste Ablenkeinheit 38 verdeckt nur einen vernachlässigbar kleinen Anteil des reflektierten Scanstrahls, der somit nahezu vollständig nach erneuter Ablenkung an der zweiten Ablenkeinheit 40 auf den Lichtempfänger 18 trifft und in dem Messkern 10 ausgewertet wird, um die Entfernung des Objekts 16 zu bestimmen. Auf diese Weise gewinnt der Laserscanner 400 anhand der Winkellage und der Abstände Entfernungsprofile in seiner Scanebene. Es sind abweichende Aufbauten von Laserscannern bekannt, beispielsweise mit einem drehbaren Spiegelpolygonrad oder einem insgesamt drehbaren Optikkopf, die von der Erfindung ebenfalls umfasst sind.

Erfindungsgemäß ist vorgesehen, dass der A/D-Wandler 24 das Eingangssignal mit einer Abtastrate unterhalb, vorzugsweise deutlich unterhalb der gewünschten zeitlichen Auflösung oder Bandbreite erfasst. Aus dem derart gewonnenen Rohsignal wird dann das Eingangssignal mit einem Verfahren gemäß Compressive Sensing rekonstruiert.

Eine bevorzugte Ausführungsform verwendet für diese Rekonstruktion einen sogenannten Modulated Wideband Converter (MWC), der nun zunächst näher erläutert werden soll. Der MWC geht davon aus, dass die zu wandelnden Signale im Frequenzbereich eine Repräsentation mit dünner Besetzung haben. Die einleitend genannten Dauerstrich-Verfahren Pulskompression, Phasenvergleich und Frequenzmodulation bringen jeweils analoge Signale hervor, welche diese Voraussetzung erfüllen.

Ein MWC kann eingesetzt werden, wenn die besetzten Frequenzbänder unbekannt sind, also keine vordefinierten Frequenzen belegt sind. Die ursprüngliche Motivation war das Auffinden der nicht genutzten Frequenzbänder durch ein Kommunikationsgerät, die daraufhin besetzt werden können ("Cognitive Radio").

Der prinzipielle Aufbau eines MWC wird in Figur 8 gezeigt. Das Eingangssignal auf mehrere Mischer geführt, die es mit periodischen Zufallsfolgen $p_i(t)$ multiplizieren. Anschließend erfolgt eine Tiefpassfilterung am Mischerausgang mit einer Systemfunktion $h(t)$ und eine Abtastung mit einer Abtastrate $T_s = M/W$, wobei $W$ die Nyquistfrequenz für das Eingangssignal und $M$ ein vorzugsweise ganzzahliger Faktor ist, um den die Abtastung unterhalb der Nyquistfrequenz erfolgt. Die Zufallsfolge $p_i(t)$ hat eine Chiprate $T_p = L/W, L>1$. Im Grenzfall $L =1$ würde also bei einer Abtastung nach dem Nyquist-Kriterium jedes Sample mit einem Chip multipliziert.

Das Signal $p_i(t)$ wird als inverse Fouriertransformierte ausgedrückt durch

$$p_i(t) = \sum_{n=-\infty}^{\infty} P_i(n) e j^{\frac{2\pi}{T_p}nt} .$$

Für die Fouriertransformierte der Mischerausgänge ergibt sich aufgrund der Periodizität von $p_i(t)$

$$F(x(t)p_i(t)) = \sum_{m=-\infty}^{\infty} P_i(m)X(j\omega - jm\omega_p),$$

was einer Faltung im Frequenzbereich gleichkommt. Dabei gilt $\omega_p = 2\pi W/L$, gleichbedeutend damit, dass das Spektrum $X(j\omega)$ periodisch ist. Anschließend erfolgt die Filterung, d.h. eine Faltung im Zeitbereich, mit $h(t)$. Eine ideale Tiefpassfilterung schneidet ein Rechteck $H(j\omega) = rect(\dfrac{2\omega_s}{\omega})$ aus dem Spektrum, wobei die Eckfrequenz $\omega_s$ mit der Abta-strate $T_s$ über $\omega_s = 2\pi\dfrac{1}{T_s}$ zusammenhängt. Als Ergebnis der Abtastung ergeben sich diskrete Folgen $y_i[k]$, aus denen das Eingangssignal rekonstruiert werden soll.

Im Digitalen lautet das periodische Spektrum

$$Y_i(e^{j\omega\frac{M}{W}}) = F(y_i[k]) = F(g_i(kT_s)) = \frac{W}{M} \sum_{n=-\infty}^{\infty} G_i(j\omega + jn\omega_s),$$

wobei aufgrund der zeitdiskreten Wertefolge die diskrete Fouriertransformation (DTFT) angewandt wurde. Mit den ent-sprechenden Fourierkoeffizienten von $p_i(t)$, die in einigen hier ausgelassenen Zwischenschritten allgemein herleitbar sind, kann für eine Matrix $y$ aus den diskreten Folgen $y_i[k]$ das folgende lineare Gleichungssystem angegeben werden:

$$y(\omega) = \Phi\Psi s(\omega).$$

Darin sind $\Phi$ die Matrix mit den Zufallsfolgen $p_i(t)$, $\Psi_{l,m} = \dfrac{M}{W}e^{-j\frac{2\pi}{L}lm}$ der Operator der Fouriertransformation und $s(\omega)$ die Koeffizienten der gesuchten Spektralfunktion:

$$s_m(\omega) = \alpha_m rect(\frac{M}{\pi W}\omega)X(j\omega - jm\frac{W}{L}).$$

Die Gleichung $y(\omega) = \Phi\Psi s(\omega)$ entspricht in ihrer Struktur der einleitend genannten Gleichung $y = \Phi x = \Phi\Psi s$ für eine dünn besetzte Darstellung in einer anderen Basis $\Psi$ mit Hilfe einer Messmatrix $\Phi$. Der Modulated Wideband Con-verter ist also ein Verfahren des Compressive Sensing.

Zur praktischen Berechnung der Rekonstruktion wird die Kovarianzmatrix $R$ aus den Abtastfolgen $y_i[k]$ berech-net:

$$R_{l,m} = 2\pi\frac{M}{W} \sum_{k=0}^{N-1} y_l(k)y_l^*(k),$$

wobei es sich aufgrund der endlichen Länge der Signale nur um eine Schätzung der Kovarianz handelt, bei der die Summationsgrenzen endlich sind.

Die Kovarianzmatrix $R$ ist per Konstruktion symmetrisch, so dass eine vollständige Eigenwertzerlegung möglich ist:

$$R = U^* \lambda U = V^* V \, ,$$

wobei U die Einheitsmatrix ist und im zweiten Schritt zur kompakteren Darstellung die Wurzeln der Eigenwerte auf die Diagonale der Einheitsmatrix gezogen wurden.

Man kann nun ableiten, dass für diese Matrix $V$, welche die Messinformation der Abtastfolgen $y_i[k]$ enthalten, die Beziehung

$$V = AS = \Phi\Psi S$$

gilt. Die Matrix $\Phi$ mit den Zufallsfolgen $p_i(t)$ und der Operator $\psi$ der Fouriertransformation sind bekannt und somit ein lineares Gleichungssystem für die gesuchte Matrix S der Spektralanteile gefunden. Denn das Eingangssignal $x(t)$ ist durch $A$ und $S$ rekonstruierbar:

$$x(t) = \sum_{l \in \Omega} s_{\Omega,l}(t) e^{j\pi\frac{W}{L}lt} = \sum_{l \in \Omega} A^t_{\Omega,l} y(t) e^{j\pi\frac{W}{L}lt} \, .$$

Das Verfahren liefert die direkt im Signal enthaltenen Frequenzen und stellt überdies den zeitlichen Verlauf des Signals wieder her. Die rekonstruierten Signale können dann mit weiteren Verfahren untersucht werden, um die für eine Laufzeitmessung relevanten Informationen zu extrahieren.

Bei einem FMCW-Sensor kann die Auswertung in Form einer Fourieranalyse erfolgen, um den Wert für die Zwischenfrequenz zu ermitteln. Bei einer Repräsentation im Frequenzbereich muss für ein FMCW-Verfahren das Signal nicht mehr zwingend im Zeitbereich rekonstruiert werden. Die besetzten Frequenzbänder sind innerhalb des Rekonstruktionsverfahrens bereits vor einer solchen abschließenden Signalbildung im Zeitbereich bekannt. Die sich an die Rekonstruktion anschließende Fouriertransformation ist deshalb im Prinzip entbehrlich, wenn Signallaufzeiten die maßgebliche Ausgabegröße sind. Andere Auswertungen, beispielsweise in Ultraschallsensoren, können eine Korrelationsanalyse oder gar eine Cepstrumanalyse durchführen, welche beide die Laufzeit zwischen dem Sendesignal und dem Empfangssignal ermitteln.

Ein MWC kann bei verschiedenen Systemen der laufzeitbasierten Entfernungsmessung genutzt werden. Bei einem FMCW-Verfahren gilt es je nach Anwendung, mehrere Reflexionen in unterschiedlichen Entfernungen aufzulösen, die wegen der Frequenzmodulation zu unterschiedlichen, vorab unbekannten besetzten Frequenzbändern führen. Eine solche Messsituation erfüllt die Voraussetzungen für einen MWC. Der MWC wandelt die Zwischenfrequenz direkt. Da das System je nach Auslegung Bestandteile bis zu einigen 100 MHz enthält, wird von einer Abtastrate für die Zwischenfrequenz von bis zu 2,5 GHZ und mehr ausgegangen. Signale mit dünn besetzter Repräsentation im Frequenzbereich treten außer bei dem FMCW-Verfahren auch bei den Verfahren Pulskompression und Phasenvergleich auf.

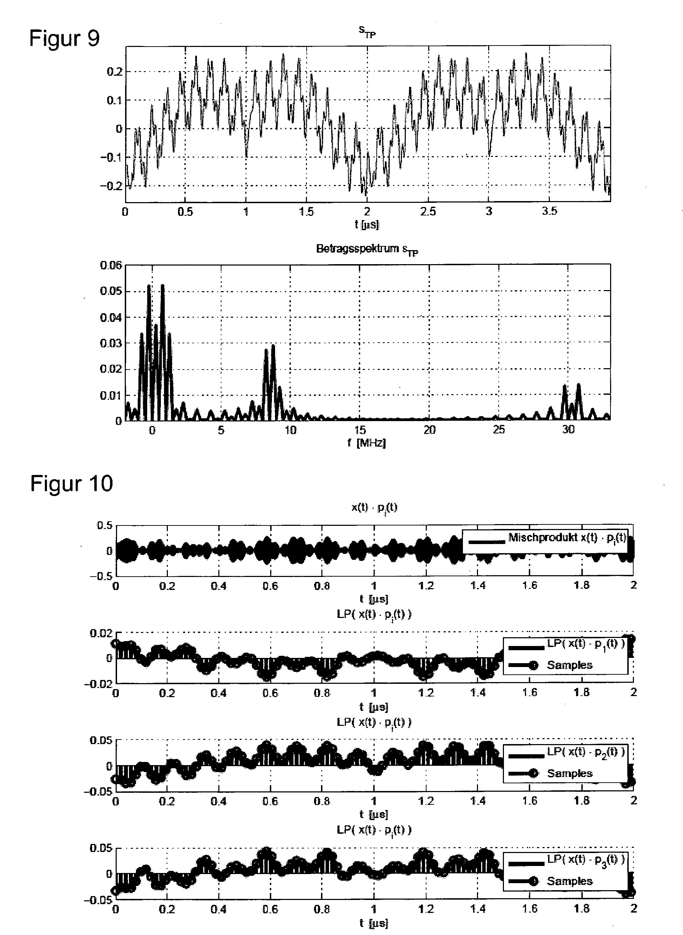

Figur 9 zeigt im oberen Teil ein beispielhaftes Zwischenfrequenzsignal und im unteren Teil das zugehörige Betragspektrum, um das allgemein beschriebene Vorgehen in einem MWC mit einem Beispiel zu illustrieren. Wegen der Berechnung eines diskreten Spektrums sind die eigentlich nur vorhandenen drei Spektrallinien jeweils auf mehrere Linien verteilt, da die genauen Spektralwerte Zwischenwerte der diskreten Frequenzachse sind.

Entsprechend der Darstellung der Figur 8 wird das Zwischenfrequenzsignal der Figur 9 in dem MWC mehrfach mit je einer Zufallsfolge $p_i(t)$ gemischt, die binäre Werte {-1, +1} annimmt. Figur 10 zeigt in der obersten Zeile ein beispielhaftes Mischprodukt vor und in den unteren drei Zeilen drei unterschiedliche Mischprodukte nach der Tiefpassfilterung sowie mit senkrechten Strichen die Abtastzeitpunkte, die zu den Abtastfolgen $y_i[k]$ führen.

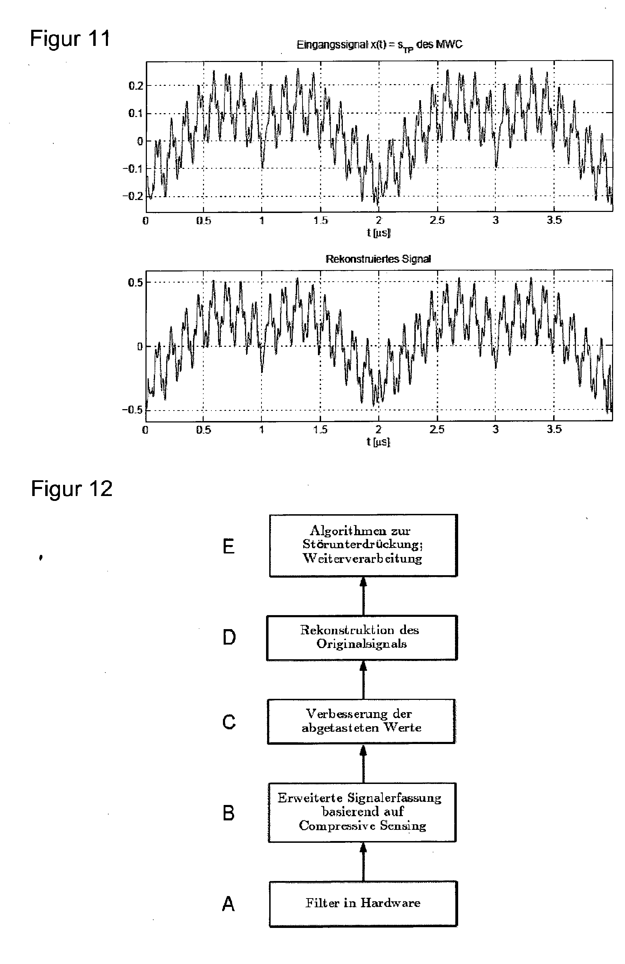

Figur 11 zeigt im oberen Teil noch einmal zum Vergleich das Zwischenfrequenzsignal des oberen Teils der Figur 9 und im unteren Teil das mittels dem MWC rekonstruierte Zwischensignal. Die Sequenz hat eine Länge von $M$ =195 Chips, womit sich eine Abtastrate am Ausgang des MWC von ca. $f_s$ =25,6 MHz erzielen lässt, trotz einer fast hundertfachen Nyquistfrequenz bei 2,5 GHZ. Unter den diskutierten Bedingungen ist die Rekonstruktion trotz eines Gewinns um einen Faktor 100 möglich, und tatsächlich ist in Figur 11 nur ein Unterschied in der Amplitude erkennbar, der für die Signallaufzeitbestimmung nicht relevant ist.

In einer bevorzugten Ausführungsform wird nicht die parallele Struktur der Figur 8 gewählt. Stattdessen wird nur ein einziger Kanal verwendet, an dessen Mischer die Zufallsfolgen $p_i(t)$ sequentiell angelegt werden. Dies ist unter der im industriellen Umfeld meist erfüllten Voraussetzung möglich, dass die Umgebungsbedingungen für den MWC über eine Zeit von Millisekunden hinweg stationär sind und das Eingangssignal repetitiv ist. Ein einkanaliges System reduziert die Hardwarekosten gegenüber einem A/D-Wandler mit mehreren parallelen Kanälen beziehungsweise mehreren A/D-Wandlern erheblich.

Das Rekonstruktionsbeispiel der Figur 11 beruht auf einem idealisierten Eingangssignal $x(t)$ und einer verlustfreien Abtastung. In der realen Messanwendung muss aber mit einer Reihe von Störeinflüssen gerechnet werden, die im Folgenden diskutiert werden.

Ein erster denkbarer äußerer Einfluss entsteht durch pulsartige oder sinusförmige Störer. Gerade Radarsensoren können baubedingt mit geringer Kopplung zwischen Hochfrequenzteil und Maschinenmasse ausgelegt und EMV-Störer ohne nachteiligen Effekt auf das Nutzsignal deutlich gedämpft werden, so dass kapazitive Kopplungen nicht allzu problematisch sind. Allerdings können Störeinkopplungen von der Antenne aufgenommen werden. Mögliche Quellen sind insbesondere andere Systeme mit gleichem Messverfahren in einem ähnlichen Frequenzbereich oder ein pulsbasiertes Breitbandkommunikationssystem.

Sinusstörungen verträgt ein MWC sehr gut, sogar wenn die Störenergie ein Vielfaches der Energie der Nutzsignale beträgt. Das liegt daran, dass der Störer letztlich nur ein weiteres besetztes Frequenzband bildet. Die Voraussetzung eines MWC, nämlich ein im Frequenzbereich dünn besetztes Signal, bleibt dabei erhalten. Der MWC rekonstruiert deshalb erfolgreich sowohl Nutzsignal als auch Sinusstörer. Eine Unterdrückung der Sinusstörer bietet der MWC dagegen nicht, da aus dessen Sicht kein Unterschied zwischen Nutzsignal und Störung besteht. Die Differenzierung von Beiträgen durch Störer und Sendesignal im Eingangssignal muss deshalb nachgelagert erfolgen, stellt jedoch keine Begrenzung der Rekonstruktion des Eingangssignals mit einem MWC dar.

Pulsstörer dagegen verhalten sich grundsätzlich anders, weil sie breitbandig sind, womit das Eingangssignal seine vorausgesetzte Eigenschaft einer dünnen Besetzung im Frequenzbereich verliert. Bei einer parallelen Abtastung zur Gewinnung der Abtastfolgen $y_i[k]$ wirkt sich der Pulsstörer auf alle Abtastfolgen $y_i[k]$ aus. Dadurch wird die Rekonstruktion bis zur Unbrauchbarkeit verfälscht. Dafür ist eine Messung mit paralleler Abtastung vergleichsweise schnell und senkt damit die Wahrscheinlichkeit, überhaupt auf einen Pulsstörer zu treffen. Bei einer sequentiellen Gewinnung der Abtastfolgen $y_i[k]$ bleiben zumindest die meisten Abtastfolgen $y_i[k]$ von einem einzelnen Pulsstörer unberührt. Dies schlägt sich zwar in der Rekonstruktion nieder, wird aber in einem gewissen Grad noch vertragen. Sobald mehr als einige wenige Abtastfolgen $y_i[k]$ betroffen sind, zeigen sich auch hier in der Rekonstruktion deutliche Fehler.

Pulsstörer sind leicht erkennbar, weil durch sie das Eingangssignal des MWCs im Gegensatz zum normalen Betrieb für eine gewisse Zeit einen von Null verschiedenen Mittelwert aufweist. Das schafft die Möglichkeit, vor einer weiteren Verarbeitung der Signale den Gleichanteil der Abtastfolgen $y_i[k]$ zu untersuchen. Liegt dieser Gleichanteil um mehr als eine Schwelle von Null entfernt, wird die Messung für die betreffende Abtastfolge $y_i[k]$ wiederholt.

Ein zweiter Störeffekt ist Eingangsrauschen. Diesbezüglich unterscheiden sich parallele und sequentielle Abtastungen zur Gewinnung der Abtastfolgen $y_i[k]$, weil sich im erstgenannten Fall das gleiche Eingangsrauschen auf alle Kanäle auswirkt. Tatsächlich ist aus diesem Grund die sequentielle Struktur der parallelen Struktur überlegen, da sie bereits ab einem Signal-Rausch-Verhältnis von ca. -12 dB am Eingang stabile Ergebnisse bei der Rekonstruktion des Spektrums des Eingangssignals liefert, während die parallele Struktur erst ab einem um ca. 6 dB besseren Signal-Rausch-Verhältnis zuverlässig arbeitet. Die sequentielle Struktur zeigt also deutliche Vorteile, die sich in der erzielbaren Reichweite des Systems beziehungsweise in der erforderlichen Sendeleistung und der damit verbundenen möglichen geringeren Belastung des Sendepfads äußert.

Sowohl bei sequentieller als auch bei paralleler Abtastung zeigt sich, dass unterhalb eines bestimmten Signal-Rausch-Verhältnisses viele Frequenzen fehlerhaft erkannt und vorhandene Frequenzen nicht identifiziert werden. Oberhalb dieses Signal-Rausch-Verhältnisses wird die Rekonstruktion sprunghaft bis auf kleine Fehler korrekt. Diesen scharfen Übergang von einem Rauschpegel, in dem das Verfahren unbrauchbar ist, zu einem Rauschpegel, gegen den das Verfahren praktisch unempfindlich ist, kann man als eine Art Phasenübergang auffassen. Die Kenntnis der zugehörigen Rauschschwelle hilft bei der Systemauslegung, da eine Rauschunterdrückung bis zu diesem Grad gewährleistet sein muss, danach aber weitere Verbesserungen zumindest aus Sicht der Rekonstruktion unnötigen Aufwand darstellen.

Einen dritten Störeinfluss bilden Quantisierunseffekte, also Effekte der begrenzten Bitbreite des A/D-Wandlers 24. Solange Quantisierungseffekte sich tatsächlich wie ein Rauschen auswirken, gilt das soeben zum Eingangsrauschen Gesagte, und es ist anzunehmen, dass Quantisierungseffekte bei der Rekonstruktion gut vertragen werden. In Simulationen zeigt sich, dass diese Bedingung leicht erfüllt werden kann. Dabei gibt es wie beim Einfangsrauschen auch bei der Bitbreite einen abrupt schwellenartigen Übergang. Unterhalb einer gewissen Bitbreite, in einem Simulationsbeispiel vier Bit, schlägt die Rekonstruktion fehl, während sie oberhalb gute Ergebnisse nahezu unabhängig davon liefert, ob die Bitbreite genau bei der Schwelle oder deutlich darüber gewählt wird. Die Bitbreite des A/D-Wandlers 24 ist also insofern hoch kritisch, als sie keinesfalls unter der Schwelle liegen darf. Andererseits ist die Schwelle niedrig und mit wenigen Bit, beispielsweise vier oder jedenfalls höchstens acht Bit, schon erreicht.

Einen vierten Störeinfluss bildet ein Abtastzeitjitter. Dies bezeichnet unvermeidliche Schwankungen in der zeitlichen Position der Abtastpunkte des A/D-Wandlers 24. Erneut handelt es sich um einen Raucheffekt, gegen den sich die Rekonstruktion in einem MWC in Simulationen sehr robust zeigt. Der Einfluss auf das Signal-Rausch-Verhalten durch Jitter der Abtastzeitpunkte mit einer Jitterbreite $\Delta t_{Jitter}$ kann nach

$$SNR_{\Delta tJitter} = 20\log\left(\frac{1}{2\pi f_a \Delta t_{Jitter}}\right)$$

abgeschätzt werden. Dieser Beitrag sollte also nicht dazu führen, dass die oben zum Eingangsrauschen genannten Grenzen des Signal-Rausch-Verhaltens verletzt werden. Simulationen mit $f_a$ =25,6 MHz und $\Delta t_{Jitter}$ = 10 ns zeigen, dass die Rekonstruktion selbst bei diesem hohen Jitter noch sehr gut gelingt. Das ist in Übereinstimmung mit der Abschätzung für $SNR_{\Delta tJitter}$ = -4,1dB, das auch als Eingangsrauschen vertragen wird. Damit stellt der MWC keine besonderen Anforderungen an die Güte des Clocksignals für den eingesetzten ADC.

Ein fünfter und letzter hier betrachteter Einfluss auf die Güte der Rekonstruktion sind Modellannahmen. Wie oben ausgeführt, geht der MWC von einer endlichen Maximalanzahl besetzter Frequenzbänder aus, welche im Falle eines FMCW-Sensors der Anzahl der erfassten Objekte und damit der Reflexionen entspricht. Diese Anzahl könnte mit einem Sicherheitspuffer für den schlechtesten Fall überschätzt werden, damit die Rekonstruktion sicher nicht beeinträchtigt wird. Das geht aber mit einer höheren Dimension des Rekonstruktionsproblems und damit einem erheblichen Anwachsen des Aufwands einher. Tatsächlich zeigt sich, dass der MWC dann, wenn mehr Frequenzbänder besetzt sind als rekonstruiert werden, zumeist die Spektralanteile mit der höchsten Energie erkennt. Es lässt sich daher festhalten, dass das Verfahren unkritisch bezüglich Modellierungsfehlern in der Anzahl der vermuteten Frequenzen ist. Wenngleich eine Unterschätzung der Anzahl verständlicherweise nicht notwendigerweise alle Frequenzanteile findet, so sind es zumindest die wichtigsten.

Als Zwischenfazit kann festgehalten werden, dass der MWC auf Störungen insgesamt recht robust reagiert.

Wie sich in der Diskussion der verschiedenen Störeinflüsse zeigt, setzen mögliche Gegenmaßnahmen, die eine erfolgreiche Rekonstruktion ermöglichen, auf unterschiedlichen Ebenen an. Dies wird in Figur 12 noch einmal systematisch in einer hierarchischen Gliederung zusammengefasst.

Auf Ebene A sind Hardwaremaßnahmen angesiedelt wie Abschirmungen, Befilterung des Signalpfads oder gezielte Codierung der Polarisationsrichtung von Systemen. Diese Maßnahmen sind jedoch für viele Anwendungsfälle nicht umsetzbar, wie beispielsweise in einem TDR-System, das einen breitbandigen Empfangskanal aufweisen muss und zwangsläufig sowohl Störer wie auch das Nutzsignal im gleichen Frequenzbereich zu liegen kommen.

Auf Ebene B erfolgt eine Signalabtastung gemäß Compressive Sensing. Die Abtastung selbst kann so gestaltet werden, dass sie zu Störsignalen inkohärent erfolgt, etwa mittels eines Zeitsprungverfahrens (Time Hopping).

Die darauf aufbauende Ebene C sorgt dafür, dass die dünne Besetzung oder Spärlichkeit in den Abtastwerten (wieder)hergestellt wird, beispielsweise durch Scharmittelung vieler Abtastserien. Denkbar wäre, im Zeitbereich eine spärliche Besetzung durch Nullsetzen sehr kleiner Signalwerte zu erzwingen (hard thresholding). Es ist aber zu beachten, dass die dünne Besetzung nicht zwingend direkt in den Abtastwerten selbst zu erkennen sein muss, da diese nur zu einer bestimmten Basis $\Psi$ erforderlich ist. Weiterhin können Quantisierungseffekte etwa mittels Dithering reduziert werden.

Auf Ebene D erfolgt die eigentliche Rekonstruktion, sei es allgemein durch Optimierung der $L_1$-Norm des Signals oder ein anderes Verfahren wie mittels Auslöschungsfilter.

Auf Ebene E können bekannte digitale Methoden einschließlich nichtlinearer Filter eingesetzt werden, um das rekonstruierte Signal weiterzuverarbeiten und Störer aufgrund von bekannten Konstellationen oder Schätzern zu unterdrücken. Auch Plausibilitätsprüfungen sind üblicherweise auf dieser Ebene anzusiedeln.

Die Untersuchungen der Rekonstruktion von Eingangssignalen für die Signallaufzeitmessung zeigen, dass die Rekonstruktion eines Rohsignals mit den Verfahren des Compressive Sensing unter den in der Praxis vorkommenden Störeinflüssen fehlschlagen kann. Gegenmaßnahmen auf den höheren Ebenen D und E, also Optimierungen der Rekonstruktion oder digitale Nachbearbeitung, können eine unzureichende Signalqualität auf den unteren Ebenen A bis C häufig nicht mehr kompensieren. Es ist prinzipiell anzustreben, die Störsignale auf einer möglichst tiefen Ebene zu dämpfen, und für einige Störeinflüsse ist dies eine Voraussetzung, damit die Rekonstruktion überhaupt gelingt.

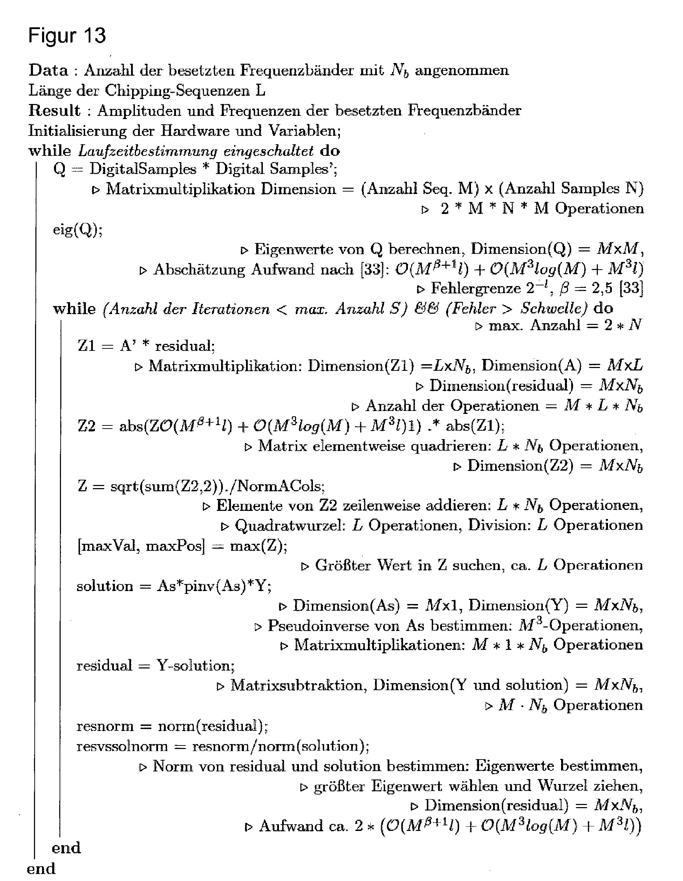

Figur 13 fasst den MWC-Algorithmus in einer möglichen Implementierung zusammen und schätzt den Rechenaufwand ab. Einen nennenswerten konstanten, einmalig durchzuführenden Beitrag zum Rechenaufwand gibt es nicht, so dass die Abschätzung auf den zur Laufzeit auszuführenden Operationen basiert. Zudem sind in Figur 12 einige kleinere Zwischenschritte ausgelassen, die keinen wesentlichen Anteil am Gesamtaufwand haben.

In einem Zahlenbeispiel ergeben sich bei einer maximal möglichen Anzahl an Iterationen $S$ =40, einem Parameter $I$=10 für den verbleibenden Fehler bei der Eigenwertberechnung, $M$ =250 Abtast- beziehungsweise Chipping-Sequenzen mit jeweils $N$ =206 Abtastwerten und einer maximale Anzahl $N_b$ =4 besetzter Frequenzbänder eine Summe von ca. $20,5 \times 10^9$ Operationen. Selbst in einem Prozessor mit moderner Architektur, welche Multiplikationen in einer dedizierten Recheneinheit in einem Clockzyklus abarbeiten kann, resultieren mit einer Taktfrequenz des Prozessors von 1 GHz noch 20 Sekunden Ausführungszeit. Eine Optimierung sollte hier bei der Eigenwertberechnung ansetzen, welche die überwiegende Anzahl an Operationen erfordert. Denkbar sind auch parallele Berechnungsverfahren insbesondere auf einem FPGA (Field Programmable Gate Array).

Wie die Grenze von vier Bit bei der Untersuchung des Quantisierungsrauschens andeutet, ab der eine größere Bitbreite des A/D-Wandlers 24 keinen wesentlichen Effekt auf die Güte der Rekonstruktion hat, nutzen die Abtastfolgen $y_i[k]$ nur einen kleinen Wertebereich aus. Nun ist aber für eine A/D-Wandlung eine 1-Bit-Quantisierung mittels eines Komparators sehr interessant, da sie technisch sehr einfach ist. Ohne weitere Modifikation des Systems ist dies aber nicht zielführend. Man müsste eine Überabtastung einführen, den Bitstrom der 1-Bit-Quantisierung filtern und schließlich die Abtastrate dezimieren. Dieser Ansatz führt jedoch geradewegs zum $\Delta\Sigma$-Wandler, der einen DAC und eine Vergleichsstelle zwischen dem gewandelten Wert und dem zu wandelnden Eingangswert sowie eine Tiefpassfilterung beinhaltet. Im zu wandelnden Signal ist dabei zu wenig "Dynamik'" vorhanden, d.h. durch die analoge Tiefpassfilter sind zu geringe hochfrequente Anteile existent, damit eine Filterung einer ein Bit breiten Wertefolge wirksam werden kann. Auf andere Weise ausgedrückt: Die Dimension der Signale $y(t)$ wurde durch das analoge Tiefpassfilter bereits stark reduziert.

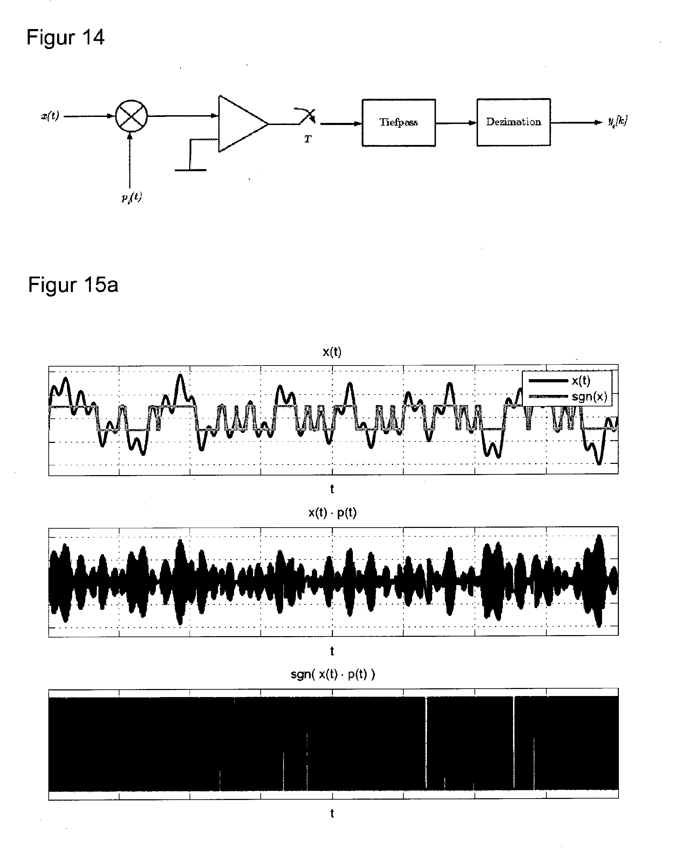

Figur 14 zeigt ein Blockschaltbild einer bevorzugten Ausführungsform, bei der als A/D-Wandler nur ein Komparator genutzt wird, der direkt nach dem Mischer und ohne analoge Tiefpassfilterung mit dem Signal $x(t)p_i(t)$ gespeist wird. Die Tiefpassfilterung erfolgt erst anschließend im digitalen Bereich. Die analoge Filterung entfällt bei diesem Ansatz komplett, sofern das Eingangssignal $x(t)$ eine natürliche Bandbregrenzung aufweist, also die Nyquistrate des MWCs nicht überschreitet. Die Abtastung der Ausgangswerte des Komparators erfolgt mit der Periode $T_p$, die mit der Chip-Rate von $p_i(t)$ gleichgesetzt wird. Nach der digitalen Tiefpassfilterung wird die Abtastfolge $y_i[k]$ gewonnen, indem eine Dezimation des Bitstroms auf die Rate $T_s = M/W$ erfolgt, bevor die Abtastfolge $y_i[k]$ dem Prozess der Rekonstruktion zugeführt wird.

Um Effekte durch die endliche Bandbreite des Mischers auszuschließen, wird der Komparatorausgang zu einem bestimmten Zeitpunkt erfasst ("gelatched"), was durch einen definierten Zeitbezug zwischen der Folge $p_i(t)$ und dem Einlesen des Komparatorsignals erreicht wird. Technologisch und aus Kostenaspekten ist die Anordnung vorteilhaft, da die gesamte weitere Verarbeitung im digitalen Bereich erfolgt. Die digitale Verarbeitung kann mit einem applikationsspezifischen integrierten Baustein (ASIC, Application Specific Integrated Circuit) sehr kosten- und energieeffizient erfolgen.

Die mathematische Modellierung ergibt für den Mischerausgang, der hier $u(t)$ genannt wird, den bereits weiter oben benutzten Zusammenhang $u(t) = x(t)p_i(t)$. Das digitale Signal am Komparatorausgang folgt aus der Gleichung

$$v[k] = \mathrm{sgn}\big(x(kT_P) \cdot p_i(kT_P)\big),$$

wobei $T_p$ der Abtastperiode beziehungsweise der Chip-Rate entspricht und sgn($\cdot$) die Signumfunktion bezeichnet.

Die Frequenz der Folge $v[k]$ hat noch einen sehr hohen Wert, wobei nur eine Auflösung von einem Bit vorliegt. Bevor nun eine Dezimation erfolgen kann, wird eine digitale Tiefpassfilterung durchgeführt. Im Gegensatz zu einem Analogfilter kann ein Digitalfilter als ideal vorausgesetzt werden und bei der Eckfrequenz $f_s = W/M$ abschneiden. Aus den Datenwörtern der Abtastfolgen $y_i[k]$ höherer Auflösung wird wie bei einem MWC mit höherer Bitbreite des A/D-Wandlers 24 das Empfangssignal beziehungsweise das Zwischenfrequenzsignal rekonstruiert.

Die Struktur ist aus Realisierungssicht schlüssig: Zur Erzeugung der Pseudozufallssequenz $p_i(t)$ wird eine schnelle Logikschaltung benötigt, in welche die Erfassung des Ausgangs des Komparators, die digitale Tiefpassfilterung sowie die Dezimation integriert werden kann. Gegenüber einer parallelen Struktur je einem A/D-Wandler höherer Bitbreite je Kanal kann eine Ausführungsform mit Komparatoren wesentlich effizienter umgesetzt werden, da mit den Komparatoren zwar schnelle, jedoch sehr einfache Elemente benötigt werden. Dieser parallele Ansatz kann deshalb mit technisch vergleichsweise einfachen Mitteln aufgebaut werden.

Für eine mathematische Beschreibung müsste der bisher unbekannte analytische Zusammenhang für die Fouriertransformierte des Komparatorausgangs als Antwort auf ein beliebiges Eingangssignal $v(t)$ angegeben werden:

$$F(v(t)) = F\big(sng(x(t)p_i(t))\big).$$

Es wird deshalb stattdessen eine vereinfachte Analyse gewählt, die darauf aufbaut, dass sich jedes Signal durch eine Summe von Sinusschwingungen darstellen lässt. Wird eine Sinusschwingung $x(t) = \sin(2\pi ft)$ an einen Komparator angelegt, so ist am Ausgang eine Rechteckspannung mit derselben Frequenz $f$ zu beobachten. Im Spektrum des Ausgangssignals sind allerdings Anteile bei ungeradzahligen Vielfachen der Grundfrequenz zu finden. Wird eine Summe von Sinusschwingungen mit ähnlicher Amplitude als Signal eingespeist, so wird sich nur näherungsweise eine Summe der einzelnen Rechteckschwingungen, die das Ausgangssignal des Komparators bei der jeweils allein anliegenden Sinusschwingung sind, am Ausgang ergeben, denn die Vorzeichenfunktion des Komparator ist eine sehr nichtlineare Operation, so dass das lineare Überlagerungsprinzip nicht uneingeschränkt angewandt werden kann.

Simulationsergebnisse zeigen, dass der Dynamikumfang der Anordnung sehr begrenzt ist. Das ist einfach nachzuvollziehen, denn wenn am Eingang des Komparators eine in der Amplitude dominierende Schwingung anliegt, wird die Wirkung einer Schwingung mit kleiner Amplitude kaum sichtbar. Weiterhin ergeben Simulationen, dass bei einer einzigen Sinusschwingung die Oberwellen deutlich sichtbar sind und dem obigen Modell entsprechen.

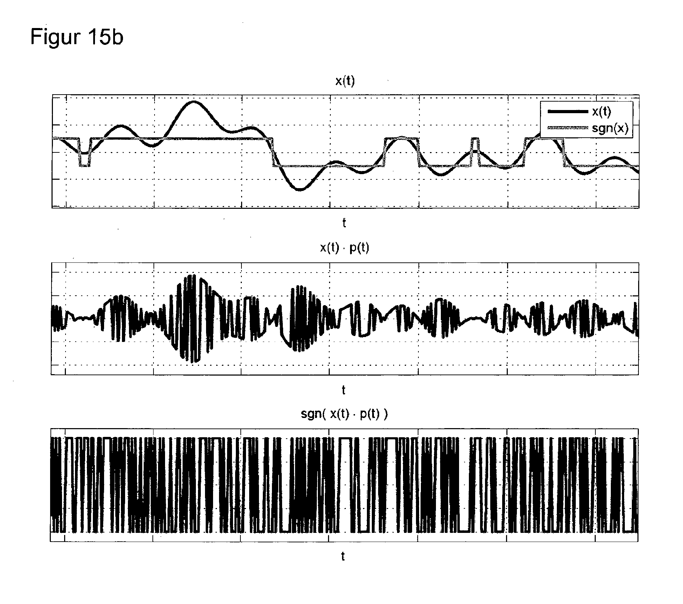

Figur 15a-b zeigt Signale in einer MWC-Struktur gemäß Figur 14. In Figur 15b sind dabei jeweils längs der X-Achse gestreckte Ausschnitte der Signale gemäß Figur 15a zu sehen. Die oberste Zeile ist eine beispielhafte Summe von Sinusschwingungen, die als Eingangssignal auf den Mischer gegeben wird. Die mittlere Zeile stellt dessen Mischprodukt mit den Zufallsfolgen $p_i(t)$ und die unterste Zeile den Bitstrom am Komparatorausgang dar.

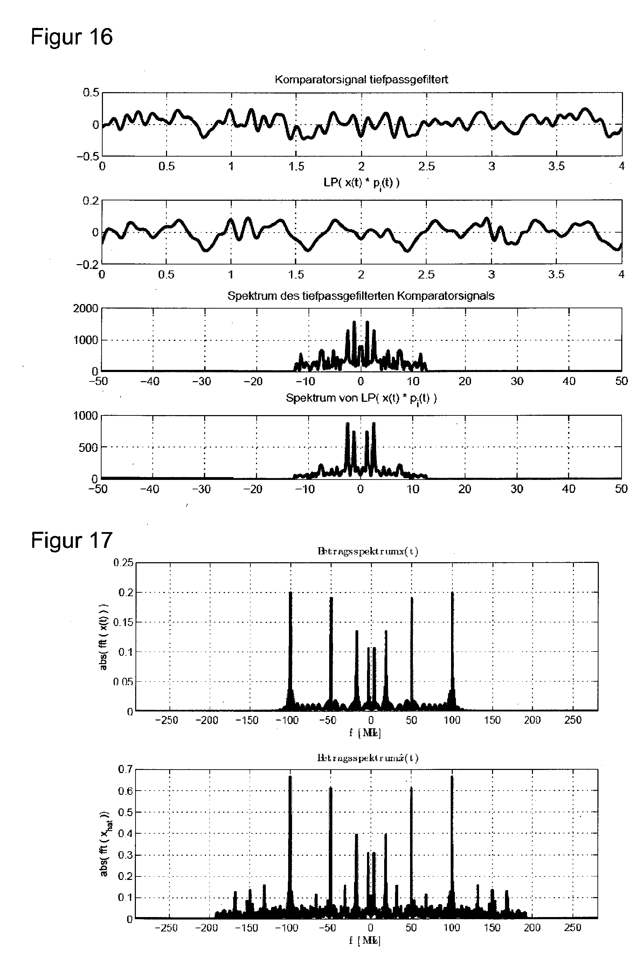

Figur 16 illustriert den Unterschied zwischen einer MWC-Struktur mit analoger Tiefpassfilterung, in der eine Rekonstruktion nach Abtastung in einem Komparator nach den obigen Ausführungen im Allgemeinen nicht gelingen wird, und einer verbesserten MWC-Struktur gemäß Figur 14 mit nachgelagerter digitaler Tiefpassfilterung. Die oberste Zeile zeigt das digital tiefpassgefiltere Signal der Struktur gemäß Figur 14, die zweitoberste Zeile zum Vergleich das analog tiefpassgefilterte Mischprodukt des ursprünglich gleichen Eingangssignals. Die dritte Zeile ist eine Darstellung des zu der obersten Zeile gehörigen Spektrums, die vierte Zeile erneut zum Vergleich eine Darstellung des zu der zweitobersten Zeile gehörigen Spektrums. Man erkennt im Zeit- und Frequenzbereich sehr deutliche Unterschiede, die verdeutlichen, dass die richtige Anordnung der Tiefpassfilterung für die Rekonstruktion wesentlich ist.

Figur 17 schließlich zeigt das Ergebnis einer Rekonstruktion in der MWC-Struktur gemäß Figur 14 als Betragsspektrum, wobei im oberen Teil der Figur 17 zum Vergleich das Originalspektrum und im unteren Teil das rekonstruierte Spektrum dargestellt ist. Die Übereinstimmung ist recht gut, alle acht besetzten Frequenzbereiche des Originalsignals werden als die am deutlich stärksten ausgeprägten Frequenzanteile rekonstruiert. Andererseits erkennt man auch einen erhöhten Rauschpegel, der den Dynamikbereich der Anordnung begrenzt. Dieser Rauschpegel ist auch auf die oben betrachtete nichtlineare Operation des Komparators und die daraus folgende Oberwellenbildung zurückzuführen.

Wie nun dargelegt, ist es zusammenfassend erfindungsgemäß möglich, für eine Signallaufzeitmessung ein Eingangssignal $x(t)$ vergleichsweise langsam abzutasten und für eine digitale Auswertung eine Rekonstruktion eines Signals mit gewünschter effektiver zeitlicher Auflösung nach Methoden des Compressive Sensing vorzunehmen. Diese Methoden eignen sich insbesondere für die Rekonstruktion von Signalen zur Signallaufzeitbestimmung, die eine dünn besetzte Darstellung im Frequenzbereich haben. Eine bevorzugte Ausführungsform davon ist ein FMCW-Verfahren, beispielsweise für einen Radarsensor zur Füllstandsmessung oder in einer anderen Anwendung, der als zu rekonstruierendes Eingangssignal ein tiefpassgefiltertes Mischprodukt liefert, das Zwischenfrequenzsignal, das mit einem MWC mit sehr geringer Abtastrate gewandelt werden kann. Die geringere Abtastrate trägt erheblich zur Kostenreduktion eines derartigen Radarsystems bei, denn beispielsweise genügt eine Abtastrate von nur 25,7 MHz, um eine Bandbreite von 2,5 GHz zu erfassen.

Mit einem hochgradig mehrkanaligen MWC kann ein Signal ohne Repetition direkt erfasst und rekonstruiert werden. Da dies wiederum Anforderungen an den A/D-Wandler stellt und gerade im industriellen Umfeld häufig zumindest im Millisekundenbereich stationäre Messbedingungen angetroffen werden, wird stattdessen vorzugsweise eine sequentielle Struktur mit nur einem Mischerkanal vorgeschlagen.

Untersucht man, wie der MWC auf Störer im Signal reagiert, so stellt sich heraus, dass die Abtastfolgen des MWCs unter Störeinfluss Eigenschaften annehmen, die unter Normalbedingungen nicht auftreten. Deswegen wird vorzugsweise eine Filterung der Abtastfolgen vorgenommen, mit der bereits vor der Rekonstruktion störbehaftete Sequenzen ausgefiltert werden und die Rekonstruktion verbessert oder überhaupt erst ermöglicht wird. Ein Weg dazu ist das direkte Wiederholen von Messungen mittelwertbehafteter Abtastfolgen $y_i[k]$, die vermutlich durch einen Pulsstörer überlagert sind.

Insgesamt kann aber festgehalten werden, dass der MWC sehr tolerant gegenüber auftretenden Störungen und Nichtidealitäten ist, wie Quantisierungseffekten des eingesetzten ADCs. Dabei sollte der Phasenübergang im Rekonstruktionsverhalten beachtet werden, der unterhalb eines gewissen Signal-Rauschverhältnis eine Rekonstruktion praktisch verhindert und darüber sprunghaft zu einer guten Rekonstruktion führt, die mit weiter gesteigertem Signal-Rauschverhältnis kaum noch verbessert wird. Daraus leiten sich Grenzen für die Maßnahmen zur Rauschunterdrückung und Messgenauigkeit ab, beispielsweise genügt vorzugsweise eine Bitbreite des A/D-Wandlers von im simulierten Beispiel nur vier Bit, allgemein wenigen Bit, weil damit der Phasenübergang schon erreicht ist.

Eine bevorzugte Weiterentwicklung gemäß Figur 14 kommt sogar mit einer 1-Bit-Quantisierung aus, bei welcher der A/D-Wandler 24 durch einen einfachen Komparator ersetzt werden kann. Berücksichtigt man hierbei in der Rekonstruktion zusätzlich das nichtlineare Verhalten durch die Oberwellenbildung des Komparators und eliminiert somit deren Einfluss in der Signalschätzung, so lässt sich auch die Einschränkung auf einen relativ engen Dynamikbereich überwinden.

**Patentansprüche**

1. FMCW-Verfahren zur Bestimmung einer Signallaufzeit, bei dem ein in seiner Frequenz moduliertes Sendesignal in einen Überwachungsbereich (32, 42) ausgesandt und ein daraufhin reflektiertes Signal aus dem Überwachungsbereich empfangen wird, wobei das empfangene reflektierte Signal oder ein daraus abgeleitetes Signal ein Eingangssignal $(x(t))$ bildet, das nach einer Abtastung (24) in ein digitales Signal umgewandelt und anschließend mit einer effektiven Auflösung digital ausgewertet wird, um die Signallaufzeit zu bestimmen, wobei zunächst die Abtastung (24) mit einer Abtastrate erfolgt, die zu einem digitalen Rohsignal $(y_i[k])$ mit geringerer Auflösung als die effektive Auflösung führt und anschließend das Eingangssignal $(x(t))$ mit der effektiven Auflösung aus dem digitalen Rohsignal $(y_i[k])$ rekonstruiert wird,
**dadurch gekennzeichnet,**
**dass** die Rekonstruktion mittels eines Modulated Wideband Converters erfolgt.

2. Verfahren nach Anspruch 1,
wobei das Eingangssignal $(x(t))$ auf Basis einer Transformation des Eingangssignals $(x(t))$ in eine Repräsentation $(\Psi)$ rekonstruiert wird, in der das Eingangssignal $(x(t))$ mit der effektiven Auflösung durch die geringere Anzahl an Freiheitsgraden des digitalen Rohsignals $(y_i[k])$ in der geringeren Auflösung darstellbar ist.

3. Verfahren nach Anspruch 1 oder 2,
wobei die Rekonstruktion in einer Repräsentation $(\psi)$ im Frequenzbereich erfolgt.

4. Verfahren nach einem der vorhergehenden Ansprüche,
wobei die Abtastung (24) mit einer Bitbreite von höchstens vier Bit, insbesondere von nur einem Bit erfolgt.

5. Verfahren nach einem der vorhergehenden Ansprüche,
wobei das Sendesignal frequenzmoduliert und das empfangene reflektierte Signal mit dem Sendesignal gemischt (112) wird, um als Eingangssignal $(x(t))$ ein Zwischenfrequenzsignal $(s_{TP}, f_d)$ zu bilden, das abgetastet (24) wird, um das digitale Rohsignal $(y_i[k])$ zu erhalten

6. Verfahren nach Anspruch 5,
wobei die Signallaufzeit aus einem Vergleich der Zwischenfrequenz $(f_d)$ mit der bekannten Frequenzmodulation $(\Delta f, T_{up}, T_{down})$ bestimmt wird.

7. Verfahren nach einem der Ansprüche Anspruch 1 bis 4,
wobei das Sendesignal mit einer Hüllkurve amplitudenmoduliert wird, die einen Zeitpunkt auszeichnet, und die Signallaufzeit anhand eines Empfangszeitpunkts der Hüllkurve bestimmt oder wobei das Sendesignal mit einer periodischen Hüllkurve amplitudenmoduliert und die Signallaufzeit aus einem Phasenversatz der Hüllkurve zwischen Sendesignal und empfangenem reflektiertem Signal bestimmt wird.

8. Verfahren nach einem der vorhergehenden Ansprüche,
wobei vor der Abtastung (24) eine analoge Filterung (22) erfolgt, insbesondere in einem Tiefpassfilter.

9. Verfahren nach einem der vorhergehenden Ansprüche,
wobei das Eingangssignal $(x(t))$ mehrfach, jeweils nach Multiplikation mit einer jeweiligen binären Zufallsfolge $(p_i(t)$, mit der geringeren Auflösung abgetastet (24) wird, um als Rohsignal eine entsprechende Mehrzahl von Abtastfolgen $(y_i[k])$ zu erhalten, wobei zur Rekonstruktion die Kovarianzmatrix $(R)$ der Abtastfolgen $(y_i[k])$ berechnet, eine Eigenwertzerlegung $(R = V^*V)$ der Kovarianzmatrix $(R)$ vorgenommen und anschließend zur Rekonstruktion ein Gleichungssystem $(V = \Phi\Psi S)$ gelöst wird, bei dem eine Diagonalmatrix $(V)$ mit den Wurzeln der Eigenwerte $(\lambda)$ gleichgesetzt wird mit einem Matrixprodukt $(\Phi\psi S)$ aus einer Messmatrix $(\Phi)$, welche die binären Zufallsfolgen $(p_i(t))$ enthält, mit dem Operator $(\Psi)$ der Fouriertransformation und mit dem gesuchten zu rekonstruierenden Signal $(S, x(t))$.

10. Verfahren nach Anspruch 9,
wobei die mehrfachen Abtastungen (24) nacheinander erfolgen.

11. Verfahren nach Anspruch 9 oder 10,
wobei nach Gewinnung einer Abtastfolge $(y_i[k])$ geprüft wird, ob diese einen Gleichanteil enthält, und in diesem Fall die Abtastung (24) mit der zugehörigen binären Zufallsfolge $(p_i(t))$ zur Gewinnung der Abtastfolge $(y_i[k])$ möglichst ohne Gleichanteil wiederholt wird.

**12.** Verfahren nach einem der vorhergehenden Ansprüche,
wobei das Rohsignal ($y_i[k]$) vor der Rekonstruktion digital aufbereitet wird, so dass die Eigenschaft des Eingangssignals ($x(t)$), dass es dünn besetzt ist oder eine endliche Anzahl von Freiheitsgraden aufweist, auch unter auf das Eingangssignal ($x(t)$) einwirkenden Störeinflüssen erhalten bleibt.

**13.** Verfahren nach einem der vorhergehenden Ansprüche,
wobei die geringere Abtastrate größer gewählt ist, als zur Rekonstruktion des Eingangssignals ($x(t)$) erforderlich.

**14.** Sensor zur Abstandsmessung, insbesondere optischer Entfernungstaster (300), Laserscanner (400), Füllstandssensor (200) oder Radarsensor (200), mit einem Sender (14), einem Empfänger (18), einem A/D-Wandler (24) und einer Auswertungseinheit (26) zur Durchführung einer Signallaufzeitmessung und Rekonstruktion des Einfangssignals ($x(t)$) nach einem der vorhergehenden Ansprüche.

**Claims**

**1.** An FMCW method for the determination of a signal time of flight, wherein a transmission signal modulated in its frequency is transmitted into a monitoring area (32, 42) and thereupon a reflected signal is received from the monitoring area, wherein the received reflected signal or a signal derived therefrom forms an input signal ($x(t)$) which is converted into a digital signal following a sampling (24) and is subsequently digitally evaluated with an effective resolution in order to determine the signal time of flight, wherein initially the sampling (24) is done with a sampling rate which results in a digital raw signal ($y_i[k]$) having a lower resolution than the effective resolution, and subsequently the input signal ($x(t)$) is reconstructed from the digital raw signal ($y_i[k]$) with the effective resolution, **characterized in that** the reconstruction is done by means of a modulated wideband converter.

**2.** The method according to claim 1,
wherein the input signal ($x(t)$) is reconstructed based on a transformation of the input signal ($x(t)$) in a representation ($\psi$) in which the input signal ($x(t)$) can be represented with the effective resolution by the lower number of degrees of freedom of the digital raw signal ($y_i[k]$) in the lower resolution.

**3.** The method according to claim 1 or 2,
wherein the reconstruction is done in a representation ($\psi$) in the frequency domain.

**4.** The method according to any of the preceding claims,
wherein the sampling (24) is done with a bit width of at most four bits, in particular of only one bit.

**5.** The method according to any of the preceding claims,
wherein the transmission signal is frequency-modulated and the received reflected signal is mixed with the transmission signal to form an intermediate frequency signal ($s_{TP}$, $f_d$) as the input signal ($x(t)$) which is sampled (24) to obtain the digital raw signal ($y_i[k]$).

**6.** The method according to claim 5,
wherein the signal time of flight is determined by a comparison of the intermediate frequency ($f_d$) and the known frequency modulation ($\Delta f$, $T_{up}$, $T_{down}$).

**7.** The method according to any of the claims 1 to 4,
wherein the transmission signal is amplitude-modulated with an envelope which defines a point in time, and wherein the signal time of flight is determined based on a reception point in time of the envelope, or wherein the transmission signal is amplitude-modulated with a periodic envelope, and the signal time of flight is determined from a phase difference of the envelope between transmission signal and received reflected signal.

**8.** The method according to any of the preceding claims,
wherein an analog filtering is done before the sampling (24), in particular in a low pass filter.

**9.** The method according to any of the preceding claims,
wherein the input signal ($x(t)$) is sampled (24) with the lower resolution a plurality of times respectively after multiplication with a respective binary random sequence ($p_i(t)$) in order to obtain a corresponding number of sampling sequences ($y_i[k]$) as the raw signal, wherein for the reconstruction the covariance matrix ($R$) of the sampling se-

quences ($y_i[k]$) is calculated, an eigenvalue decomposition ($R = V^*V$) of the covariance matrix ($R$) is done, and subsequently an equation system ($V = \Phi\psi S$) is solved for the reconstruction, wherein a diagonal matrix ($V$) with the roots of the eigenvalues ($\lambda$) is set equal to a matrix product ($\Phi\psi S$) of a measurement matrix ($\Phi$) comprising binary random sequences ($p_i(t)$) and the operator ($\psi$) of the Fourier transform and the signal to be constructed ($S$, $x(t)$).

10. The method according to claim 9,
wherein the plurality of samplings (24) are done one after the other.

11. The method according to claim 9 or 10,
wherein after obtaining a sampling sequence ($y_i[k]$) it is checked whether it contains a constant component and, if so, to repeat the sampling (24) with the corresponding binary random sequence ($p_i(t)$) in order to obtain the sampling sequence ($y_i[k]$) if possible without a constant component.

12. The method according to any of the preceding claims,
wherein the raw signal ($y_i[k]$) is digitally preprocessed before the reconstruction so that the property of the input signal ($x(t)$) that it is sparse or has a finite number of degrees of freedom is preserved even under interference influencing the input signal ($x(t)$).

13. The method according to any of the preceding claims,
wherein the lower sampling rate is selected larger than necessary for the reconstruction of the input signal ($x(t)$).

14. A sensor for distance determination, in particular an optical distance scanner (300), laser scanner (400), fill level sensor (200), or radar sensor (200), having a transmitter (14), a receiver (18), an A/D converter (24), and an evaluation unit (26) for performing a signal time of flight measurement and reconstruction of the input signal ($x(t)$) according to any of the preceding claims.

**Revendications**

1. Procédé dit à onde continue modulée en fréquence ("FMCW" ou "Frequency Modulated Continuous Wave) pour la détermination d'un temps de parcours d'un signal, dans lequel un signal émis modulé dans sa fréquence est émis dans une zone de surveillance (32, 42) et un signal réfléchi à partir de celui-ci en provenance de la zone de surveillance est reçu, de telle sorte que le signal réfléchi reçu ou un signal dérivé de celui-ci forme un signal d'entrée (x(t)), qui est converti, après un échantillonnage (24), en un signal numérique et est ensuite évalué sous forme numérique avec une résolution effective afin de déterminer le temps de parcours du signal, dans lequel l'échantillonnage (24) a tout d'abord lieu avec un une cadence d'échantillonnage qui mène à un signal brut numérique (yi[k]) avec une résolution plus faible que la résolution effective et le signal d'entrée (x(t)) est ensuite reconstitué à partir du signal brut numérique (yi[k]) avec la résolution effective,
**caractérisé en ce que** la reconstitution a lieu au moyen d'un convertisseur modulé à large bande.

2. Procédé selon la revendication 1,
dans lequel le signal d'entrée (x(t)) est reconstitué sur la base d'une transformation du signal d'entrée (x(t)) dans une représentation ($\psi$) dans laquelle le signal d'entrée (x(t)) avec la résolution effective est susceptible d'être représenté par le plus petit nombre de degrés de liberté du signal brut numérique (yi[k]) dans la résolution plus faible.

3. Procédé selon la revendication 1 ou 2,
dans lequel la reconstitution a lieu dans une représentation ($\psi$) dans la plage de fréquences.

4. Procédé selon l'une des revendications précédentes,
dans lequel l'échantillonnage (24) a lieu avec une largeur de bits avec au maximum quatre bits, et en particulier un seul bit.

5. Procédé selon l'une des revendications précédentes,
dans lequel le signal émis est modulé en fréquence et le signal réfléchi reçu est mélangé avec le signal émis (112) afin de former, à titre de signal d'entrée (x(t)) un signal à fréquence intermédiaire ($s_{TP}$, fd) qui est échantillonné (24) afin d'obtenir le signal brut numérique (yi[k]).

6. Procédé selon la revendication 5,

dans lequel le temps de parcours du signal est déterminé à partir d'une comparaison de la fréquence intermédiaire (fd) avec la modulation de fréquence connue ($\Delta$f, $T_{up}$, $T_{down}$).

7. Procédé selon l'une des revendications 1 à 4, dans lequel le signal émis est modulé en amplitude avec une courbe enveloppe qui distingue un instant, et le temps de parcours du signal est déterminé au moyen d'un instant de réception de la courbe enveloppe ou dans lequel le signal émis est modulé en amplitude avec une courbe enveloppe périodique et le temps de parcours du signal est déterminé à partir d'un décalage de phase de la courbe enveloppe entre le signal émis et le signal réfléchi reçu.

8. Procédé selon l'une des revendications précédentes,
dans lequel un filtrage analogique (22) a lieu avant l'échantillonnage (24), en particulier dans un filtre passe-bas.

9. Procédé selon l'une des revendications précédentes,
dans lequel le signal d'entrée (x(t)) est échantillonné (24) plusieurs fois, à chaque fois après multiplication avec un une succession aléatoire binaire respective ($p_i$(t)), avec la résolution plus faible, pour obtenir à titre de signal brut une pluralité correspondante de successions d'échantillonnages ($y_i$[k]), dans lequel pour la reconstitution on calcule la matrice de covariance (R) de la succession d'échantillonnages ($y_i$[k]), on exécute une décomposition de valeurs propres (R = V*V) de la matrice de covariance (R) et on résout ensuite pour la reconstitution un système d'équations (V = $\Phi\psi$S) dans lequel une matrice diagonale (V) avec les racines des valeurs propres (1) est rendue égale avec un produit matriciel ($\Phi\psi$S) d'une matrice de mesure ($\Phi$), qui contient les successions aléatoires binaires (pi(t)), avec l'opérateur ($\psi$) de la transformation de Fourier avec le signal à reconstituer que l'on recherche (S, x (t)).

10. Procédé selon la revendication 9,
dans lequel les échantillonnages multiples (24) ont lieu les uns après les autres.

11. Procédé selon la revendication 9 ou 10,
dans lequel après récupération d'une succession d'échantillonnages ($y_i$[k]), on vérifie si celle-ci contient une part égale et dans ce cas on répète l'échantillonnage (24) avec la succession aléatoire binaire associée ($p_i$(t)) pour récupérer la succession d'échantillonnages ($y_i$[k]) autant que possible sans part égale.

12. Procédé selon l'une des revendications précédentes,
dans lequel le signal brut ($y_i$[k]) est traité avant la reconstitution de manière numérique, de sorte que la propriété du signal d'entrée (x(t)), selon laquelle il est creux ou présente un nombre fini de degrés de liberté, reste également conservée sous les influences perturbatrices agissant sur le signal d'entrée (x(t)).

13. Procédé selon l'une des revendications précédentes,
dans lequel la cadence d'échantillonnage plus faible est choisie plus élevée que nécessaire pour la reconstitution du signal d'entrée (x(t)).

14. Capteur pour la mesure de distance, en particulier capteur d'éloignement optique (300), scanner à laser (400), capteur de niveau de remplissage (200) ou capteur radar (200), comprenant un émetteur (14), un récepteur (18) un convertisseur A/N (24) et une unité d'évaluation (26) pour exécuter une mesure du temps de parcours d'un signal et une reconstitution du signal d'entrée (x(t)) selon l'une des revendications précédentes.

## Figur 1
## Stand der Technik

## Figur 2
## Stand der Technik

100

Steuerspannung — 102 VCO — $s_s(t)$ — 104 Leistungsverstärker — 106 Zirkulator — 108 Antenne

Signal-auswertung 116 — $s_{TP}(t)$ — 114 Tiefpassfilter — $s_M(t)$ — 112 — $s_e(t)$ — 110 LNA

Figur 3
Stand der Technik

Figur 4

Figur 5

Figur 6

Figur 7

Figur 8

## Figur 9

$s_{TP}$

Betragsspektrum $s_{TP}$

## Figur 10

$x(t) \cdot p_i(t)$

$LP(x(t) \cdot p_i(t))$

$LP(x(t) \cdot p_i(t))$

$LP(x(t) \cdot p_i(t))$

## Figur 11

Eingangssignal x(t) = s$_{TP}$ des MWC

Rekonstruiertes Signal

## Figur 12

E — Algorithmen zur Störunterdrückung; Weiterverarbeitung

D — Rekonstruktion des Originalsignals

C — Verbesserung der abgetasteten Werte

B — Erweiterte Signalerfassung basierend auf Compressive Sensing

A — Filter in Hardware

# Figur 13

Data : Anzahl der besetzten Frequenzbänder mit $N_b$ angenommen
Länge der Chipping-Sequenzen L
Result : Amplituden und Frequenzen der besetzten Frequenzbänder
Initialisierung der Hardware und Variablen;
while *Laufzeitbestimmung eingeschaltet* do
   Q = DigitalSamples * Digital Samples';
       ▷ Matrixmultiplikation Dimension = (Anzahl Seq. M) x (Anzahl Samples N)
                    ▷ 2 * M * N * M Operationen
   eig(Q);
            ▷ Eigenwerte von Q berechnen, Dimension(Q) = $M$x$M$,
      ▷ Abschätzung Aufwand nach [33]: $\mathcal{O}(M^{\beta+1}l) + \mathcal{O}(M^3 log(M) + M^3 l)$
                    ▷ Fehlergrenze $2^{-l}$, $\beta = 2{,}5$ [33]
   while *(Anzahl der Iterationen < max. Anzahl S) && (Fehler > Schwelle)* do
                    ▷ max. Anzahl = $2 * N$
      Z1 = A' * residual;
        ▷ Matrixmultiplikation: Dimension(Z1) =$L$x$N_b$, Dimension(A) = $M$x$L$
                  ▷ Dimension(residual) = $M$x$N_b$
              ▷ Anzahl der Operationen = $M * L * N_b$
      Z2 = abs(Z$\mathcal{O}(M^{\beta+1}l) + \mathcal{O}(M^3 log(M) + M^3 l)$1) .* abs(Z1);
           ▷ Matrix elementweise quadrieren: $L * N_b$ Operationen,
                  ▷ Dimension(Z2) = $M$x$N_b$
      Z = sqrt(sum(Z2,2))./NormACols;
          ▷ Elemente von Z2 zeilenweise addieren: $L * N_b$ Operationen,
         ▷ Quadratwurzel: $L$ Operationen, Division: $L$ Operationen
      [maxVal, maxPos] = max(Z);
              ▷ Größter Wert in Z suchen, ca. $L$ Operationen
      solution = As*pinv(As)*Y;
            ▷ Dimension(As) = $M$x1, Dimension(Y) = $M$x$N_b$,
         ▷ Pseudoinverse von As bestimmen: $M^3$-Operationen,
          ▷ Matrixmultiplikationen: $M * 1 * N_b$ Operationen
      residual = Y-solution;
          ▷ Matrixsubtraktion, Dimension(Y und solution) = $M$x$N_b$,
                ▷ $M \cdot N_b$ Operationen
      resnorm = norm(residual);
      resvssolnorm = resnorm/norm(solution);
         ▷ Norm von residual und solution bestimmen: Eigenwerte bestimmen,
             ▷ größter Eigenwert wählen und Wurzel ziehen,
                ▷ Dimension(residual) = $M$x$N_b$,
        ▷ Aufwand ca. $2 * \left(\mathcal{O}(M^{\beta+1}l) + \mathcal{O}(M^3 log(M) + M^3 l)\right)$
   end
end

## Figur 14

## Figur 15a

## Figur 15b

# Figur 16

Komparatorsignal tiefpassgefiltert

LP( x(t) * $p_i$(t) )

Spektrum des tiefpassgefilterten Komparatorsignals

Spektrum von LP( x(t) * $p_i$(t) )

# Figur 17

Betragsspektrum x(t)

Betragsspektrum $\hat{x}$(t)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VON M. LEXA et al.** Sampling Sparse Multiband Signals with a Modulated Wideband Converter. *Technical Report, Institute of Digital Communications, University of Edingburgh,* Mai 2010

- Compressive Radar Imaging. **VON R. BARANIUK et al.** Radar Conference. IEEE, 01. April 2007, 128-133